**Europäisches Patentamt**

**European Patent Office**

**Office européen des brevets**

(19)

(11) Veröffentlichungsnummer : **0 353 658 B1**

(12)

# EUROPÄISCHE PATENTSCHRIFT

(45) Veröffentlichungstag der Patentschrift :
**04.11.92 Patentblatt 92/45**

(51) Int. Cl.⁵ : **E04F 17/02, F16L 13/10, F23J 13/04**

(21) Anmeldenummer : **89114000.6**

(22) Anmeldetag : **28.07.89**

(54) **Fugenverbindung eines Rauchgasrohres eines mehrschaligen Schornsteins und Anwendungen.**

(30) Priorität : **29.07.88 DE 3825965**

(43) Veröffentlichungstag der Anmeldung :
**07.02.90 Patentblatt 90/06**

(45) Bekanntmachung des Hinweises auf die
Patenterteilung :
**04.11.92 Patentblatt 92/45**

(84) Benannte Vertragsstaaten :
**AT CH DE FR IT LI NL**

(56) Entgegenhaltungen :
**DE-A- 3 504 446
DE-C- 815 253
DE-C- 3 317 661
DE-U- 8 606 323
FR-A- 2 173 373**

(56) Entgegenhaltungen :
**NL-C- 93 033
US-A- 1 823 974
US-A- 2 882 073
US-A- 3 917 285**

(73) Patentinhaber : **Schiedel GmbH & Co.
Lerchenstrasse 9
W-8000 München 50 (DE)**

(72) Erfinder : **Münz, Werner, Dipl.-Ing.
Weissdornweg 8
W-8056 Neufahrn (DE)**
Erfinder : **Wengenroth, Ulrich
Eichelhäherstrasse 42
W-8000 München 60 (DE)**

(74) Vertreter : **Dr. Elisabeth Jung Dr. Jürgen
Schirdewahn Dipl.-Ing. Claus Gernhardt
P.O. Box 40 14 68 Clemensstrasse 30
W-8000 München 40 (DE)**

EP 0 353 658 B1

**Beschreibung**

Die Erfindung bezieht sich auf eine Fugenverbindung gemäß den Merkmalen des Oberbegriffs des Anspruchs 1.

Diese Merkmale sind bei einer nicht vorgeformten Fugenverbindung gemäß der FR-A-2 173 373 an sich bekannt. Das bekannte Rauchgasrohr, bei dem diese Fugenverbindung vorgesehen ist, ist dabei ohne radiale Abstände als im ganzen mit drei Schalen versehenes, ein Einzelrohr im Sinne der Erfindung bildendes Schornsteinformstück gestaltet, bei dem das eigentliche Rauchgasrohr ein Stahlrohr ist, das mit einer Wärmedämmschicht aus Vermiculite-Leichtbeton durch gegenseitige Verankerung starr verbunden und von einer ebenfalls dicht anliegenden Mantelschale umgeben ist. An der Anschlußfuge ist dabei der Stahl des Innenrohres für Verfugungszwecke mit dem nächst anschließenden Schornsteinformstück schräg nach außen gezogen und bildet die Schrägfläche einer Stufenfuge, die anschließend an diese Schrägung radial nach außen stumpf verläuft. Der stumpf radial nach außen verlaufende Bereich der Fuge erstreckt sich dabei über den Leichtbeton der mittleren Schale und die Ummantelung.

Der von dem Stahl begrenzte schräge Bereich der Fuge ist durch eine amorphe Mastix-Masse abgedichtet, während der radial weiter außen verlaufende stumpfe Bereich der Fuge durch einen ebenfalls amorphen hydraulischen Mörtel ausgefüllt ist.

Mastix und hydraulischer Mörtel sind Verfugungskomponenten mit unterschiedlichen Verfugungseigenschaften. Diese sind hier gemäß den unterschiedlichen Materialien des Schornsteinformstücks im Bereich der Fuge gewählt. Entsprechend ist es üblich, auch bei solchen Schornsteinformstücken, bei denen das Rauchgasrohr mit radialem Abstand in einem mehrschaligen Schornstein angeordnet ist, unterschiedliche Verfugungskomponenten einerseits für die Einzelrohre des Rauchgasrohres und andererseits beispielsweise für aus Leichtbeton bestehende Formstücke einer äußeren Stützummantelung zu verwenden.

Der Erfindung liegt demgegenüber eine neuartige Konzeption zugrunde, die insbesondere auch auf die Herstellung einschaliger und/oder dünnwandiger Rauchgasrohre, insbesondere aus Schamotte, Keramik, Glas oder Leichtbeton Anwendung finden soll.

Dieser neuartigen Konzeption liegt der Gedanke zugrunde, in dem an das Rauchgas anschließenden Fugenbereich des Rauchgasrohres radial aufeinander folgende Verfugungskomponenten mit unterschiedlichen Funktionen vorzusehen, die sich in ihren Eigenschaften möglichst zum Idealfall einer Fugendichtung ergänzen sollen.

Insbesondere, aber nicht ausschließlich, ist dabei an folgenden Sachverhalt gedacht: Konventionelle Feuerstätten erzeugen ein Rauchgas relativ hoher Temperatur. Die Schornsteine werden dabei so ausgelegt, daß eine Taupunktunterschreitung unterhalb der Mündung des Schornsteinkopfes nicht stattfinden soll. Solche Schornsteine müssen darüber hinaus gelegentlich ausgebrannt werden, wobei sehr hohe Temperaturen entstehen.

Für diesen Zweck sind hoch feuerwiderstandsfähige Verfugungskomponenten erforderlich, die jedoch in der Regel bezüglich Durchdringen von Feuchtigkeit nur unbefriedigende Eigenschaften haben. Das ist bei den konventionellen Feuerstätten aber wegen der erwähnten Taupunktbedingung auch nicht kritisch. Bei modernen Feuerstätten wird zur Verbesserung des Wirkungsgrades die Abgastemperatur demgegenüber so vermindert, daß Taupunktunterschreitungen bereits im Schornstein nicht mehr vermieden werden können. Für diesen Fall sollte als eine Hauptfunktion der Verfugungskomponente eine gute Abdichtung gegen die wegen ihres Säuregehaltes sehr aggressiven flüssigen Kondensate vorhanden sein, während der Gesichtspunkt der Feuerfestigkeit zurücktritt. Es ist bisher aber keine Verfugungskomponente bekannt, die Feuerfestigkeit einerseits und gute Abdichtwirkung gegen aggressive Flüssigkeiten andererseits optimal miteinander vereint.

Man hat daher schon Versuche gemacht, die Dichtigkeit der Fugen in einem aus Einzelrohren zusammengesetzten Rauchgasrohr anderweitig zu verbessern. So ist nach der DE-A1-37 00 700 beispielsweise bekannt, in den Stirnflächen von sich zu einem einschaligen Rauchgasrohr ergänzenden Einzelrohren aus Schamotte umlaufende Nuten vorzusehen, in welche eine Edelstahlmanschette eingelegt wird. Die Fugen werden ansonsten mit einer üblichen Vermörtelung versehen. Diese Fugenausbildung setzt jedoch relativ dickwandige einschalige Rauchgasrohre voraus und bewirkt darüber hinaus keine optimale Abdichtung, da die eingelegten Edelstahlmanschetten allenfalls den Kriechweg der Feuchtigkeit durch die Fuge vergrößern, nicht jedoch den Weg für die Feuchtigkeit sperren können, sondern im Gegenteil gerade in den unteren Nuten sogar Sammelbecken für Feuchtigkeit bilden.

Auch in der DE-A1-34 30 851 ist das Problem angesprochen, daß in konventioneller Weise vermörtelte Einzelrohre eines Rauchgasrohres keine hinreichende Feuchtigkeitsdichtung gegen Wasser und Wasserdampf bilden. Zur Vermeidung dieser Tatsache ist dort bei dem das innere Rauchgasrohr eines mehrschaligen Kamins bildenden Innenrohrstrang vorgesehen, daß auf der Innenseite und/oder Außenseite des Innenrohrstranges an einer Innenrohrstoßfuge eine wasser- bzw. wasserdampfundurchlässige Manschette angeordnet ist, die insbesondere aus Edelstahl oder Polytetrafluoräthylen besteht, wobei im Falle beidseitig angeordneter Manschetten diese durch die Stoßfuge hindurch durch einen gemeinsamen Steg verbunden sind. Diese die konventionelle Vermörtelung ersetzende Manschettenanordnug soll sich dabei dicht an die Innen- bzw. Außenmantelfläche der Einzelrohre anschließen und mit diesen unmittelbar über einen Klebstoff oder mittelbar über einen Klebstreifen fest verbunden sein. Eine solche Fugenüberbrückung bietet jedoch dann Probleme, wenn die Einzelrohre des Rauchgasstranges nicht formkonstant gefertigt und versetzt werden können, wie dies z.B. bei keramischen Rohren einschließlich Schamotterohren regelmäßig der Fall ist. Dann dürfte ein Klebstoff im Regelfall kaum in der Lage sein, die Formungleichmäßigkeiten zwischen den Einzelrohren und der Manschette auszugleichen, und die Verwendung von alternativ in Betracht gezogenen Klebstreifen erscheint unpraktikabel, da Klebstreifen innerhalb eines mehrschaligen Schornsteins schwer zu montieren und außerdem unzuverlässig sind. Dementsprechend ist in der DE-A1-34 30 851 auch ausdrücklich angesprochen, daß die Einzelrohre und die Manschetten relativ zueinander durch ein montagemäßig sehr aufwendiges relatives Eindrehen verbunden werden sollen.

Die DE-C2-33 17 661 schließlich befaßt sich mit einem Rauchgasrohr eines mehrschaligen Schornsteins, bei dem das Rauchgasrohr aus speziellen dünnwandigen keramischen Einzelrohren zusammengesetzt wird. Um dabei die Dichtwirkung konventionellen Kitts zu verbessern, ist dieser auch noch radial außerhalb des Rauchgasrohres mit Hilfe einer gesonderten Kittmanschette gehalten, wodurch der Kriechweg für Feuchtigkeit längs der Fuge verlängert wird. Damit ist jedoch den schlechten Dichtwirkungen konventionellen Kitts gegen aggressive Feuchtigkeit nicht grundsätzlich abgeholfen. Außerdem besteht die Gefahr, daß insbesondere der außerhalb des eigentlichen Rauchgasrohres von der Dichtmanschette gehaltene Mörtel unter den thermischen Bewegungen des Rauchgasrohres reißt und ausbröckelt.

Der Erfindung liegt demgegenüber die Aufgabe zugrunde, einen andersartigen Weg der Fugenverbindung zwischen Einzelrohren eines Rauchgasrohres anzugeben, der für Niedertemperaturbetrieb mit Kondensatbildung dauerhaft Feuchtigkeitsdichtigkeit gewährleistet, auch bei hohen Temperaturen einsetzbar, einfach montierbar und auch für dünnwandige einschalige Rauchgasrohre verwendbar ist.

Hierzu sieht die Erfindung eine Fugenverbindung vor, welche unter Verwendung der sonstigen Merkmale des Oberbegriffs von Anspruch 1 durch dessen kennzeichnende Merkmale ausgezeichnet ist.

Durch die Vorfertigung der Fugendichtung wird die montagemäßige Verlegung der Fugendichtung erleichtert. Ihre Ausbildung als verlorene Schalung für eine amorphe Verfugungskomponente erleichtert auch deren Anbringung in der Fuge und verbessert deren Dichtheit, da ein Hindernis gegen radiales Ausweichen der amorphen Masse unter dem Druck der aufgesetzten Rohrsäule gebildet wird. Als die amorphe Masse kann insbesondere konventioneller säurefester Kitt dienen, welcher die Ansprüche an eine Fugendichtung in Schornsteinen mit Hochtemperaturfeuerstätten erfüllt. Darüber hinaus ist die Fugendichtung selbst mit mindestens einer von ihr gebildeten Verfugungskomponente so nachgiebig ausgebildet, daß sie eine zuverlässige dauerbeanspruchbare Abdichtung gegen aggressive Flüssigkeiten und zugleich Diffusionssperre gegen aggressive Dämpfe bilden kann. Die Verlagerung mindestens einer nachgiebigen Verfugungskomponente mit Überstand an mindestens einer Seite radial über die Fuge hinaus ermöglicht es dabei, die überwiegende radiale Weite der Fuge in konventioneller Weise mit amorpher Masse zu füllen und den Außenraum des Rauchgasrohres für die Flüssigkeitsdichtung und Diffusionssperre zusätzlich nutzbar zu machen. Das ist von ganz besonderer Bedeutung bei sehr dünnwandigen einschaligen Rauchgasrohren, die von vornherein eine sehr geringe radiale Fugenweite haben und innerhalb dieser von gleichartigem Material der Einzelrohre begrenzt sind. Die Erfindung ermöglicht es dabei, mit derselben Ausbildung der Fugendichtung sowohl den Ansprüchen von Rauchgasrohren für Hochtemperaturfeuerungen als denen mit Niedertemperaturfeuerungen zu genügen. Darüber hinaus kann man für die einzelnen Verfugungskomponenten unter einem größeren Spektrum von Verfugungsmaterialien auswählen, ohne jeweils eine Optimierung bezüglich aller in Frage kommenden Dichtungsfunktionen anstreben zu müssen. Bisher hat man diese Funktionen im allgemeinen in einer einzigen Verfugungsmasse zu optimieren versucht.

Als die unterschiedlichen Dichtungsfunktionen, die im Rahmen der Erfindung zugleich und insgesamt besser als bisher gewährleistet werden können, seien insbesondere folgende genannt:

- hohe Druckfestigkeit, die insbesondere bei hohen Schornsteinen von Bedeutung ist;
- hohe Zugfestigkeit gegen Beanspruchungen beim Kehren des Schornsteins infolge der Möglichkeit, im Rahmen der verschiedenen Verfugungskomponenten auch solche mit guter Haftfähigkeit an den Einzelrohren auswählen zu können;
- hohe Feuchtigkeitsdichtigkeit selbst gegen aggressive Kondensate;
- hoher Dampfdiffusionswiderstand selbst gegen aggressive Dämpfe;
- hohe chemische Beständigkeit mindestens einzelner darauf ausgelegter Verfugungskomponenten;
- hohe Temperaturbeständigkeit mindestens einer angewandten Verfugungskomponente;
- hohe Abriebfestigkeit gegen Kehrbeanspruchungen;
- Dauerbeständigkeit im Betrieb mindestens einer Verfugungskomponente je nach Niedertemperatur- oder Hochtemperaturbetrieb;

- die Möglichkeit des Toleranzausgleichs von aneinander anschließenden Einzelrohren in der Fuge selbst bei relativ großen Fugenabständen infolge unterschiedlicher Schiefwinkligkeit der Fugengrenzflächen;

- zuverlässige Fugenfüllung durch kombinierte Vorfertigung und Ortsaufbringung amorpher Masse.

Die Fugenverbindung nach der Erfindung sieht somit eine optimale multifunktionelle Fugenabdichtung vor, die insbesondere für die Herstellung von Rauchgasrohren in mehrschaligen Hausschornsteinen bestimmt ist.

Die Fugendichtung der erfindungsgemäßen Fugenverbindung zeichnet sich außerdem durch bevorzugte Anwendbarkeit in einigen besonderen Anwendungsbereichen aus.

Außer der bereits erwähnten Herstellung einschaliger und/oder dünnwandiger Rauchgasrohre ist zunächst das Sanieren von Schornsteinen durch Neueinziehen von Rauchgasrohren zu erwähnen. Hierbei werden Einzelrohre von der Mündung des Altschornsteins mittels einer Versetzeinrichtung abgelassen, die nach Aufsetzen des Einzelrohres auf dem bereits versetzten Rauchgasrohrstrang ausgeklinkt wird. Dabei ist die zuverlässige, insbesondere feuchtigkeitsdichte, Auskleidung der Fugen in meist großem vertikalen Abstand vom Montagepersonal sehr kritisch. Dieses Problem wird durch die Verwendung der erfindungsgemäßen vorgefertigten Fugendichtungen erheblich gemildert. Die Erfindung schafft somit die Möglichkeit, die Sanierung so durchzuführen, daß Altschornsteine, die im allgemeinen nicht feuchtigkeitsunempfindlich ausgebildet sind, nachträglich feuchtigkeitsunempfindlich gestaltet werden können.

Im kleinen bestehen ähnliche Verhältnisse beim Einführen eines Einzelrohres in bereits höher ausgeführte Ummantelung des Rauchgasrohres am Ort der Errichtung eines neuen Schornsteins oder gar in einer Montagehalle etwa beim Einbringen von kürzeren Einzelrohren in stockwerkshohe Ummantelungen.

Dies gilt selbst dann, wenn die Einzelrohre nicht, wie konventionell, ca. 33 bis 50 cm lang sind, sondern jeweils eine Länge von mehr als 75 cm, vorzugsweise etwa 1 m, haben, oder gar noch länger ausgebildet sind. Je länger die Einzelrohre gewählt sind, desto weniger abzudichtende Fugen entstehen von vornherein, desto größer ist jedoch der vertikale Abstand zwischen dem Montagepersonal und der auszubildenden Fuge.

Zweischalige Schornsteine aus einem Rauchgasrohr und einer mit bestand zu diesem angeordneten Ummantelung sind an sich schon lange bekannt. Bei modernen Schornsteinen hat man sie jedoch durch solche dreischaliger Ausbildung ersetzt, bei denen zwischen dem Rauchgasrohr und der äußeren Stützummantelung noch eine Wärmedämmschicht angeordnet wird. Eine wesentliche Funktion dieser Wärmedämmschicht besteht dabei darin, die Unterschreitung des Taupunktes der im Rauchgas mitgeführten Dämpfe innerhalb des Schornsteins zu verhindern oder zumindest soweit wie möglich in Richtung zur Mündung des Schornsteins in die Atmosphäre zu verlagern. Im Hinblick darauf, daß die Fugenverbindung gemäß der Erfindung eine zuverlässige Feuchtigkeitsabdichtung auch gegen aggressive Kondensate innerhalb des Rauchgasrohres sowie eine Diffusionssperre oder -bremse gegen entsprechende aggressive Dämpfe schafft, ermöglicht die erfindungsgemäße Fugenverbindung sogar die Herstellung eines zweischaligen feuchteunempfindlichen Schornsteins aus dem Rauchgasrohr und einer mit Abstand zu diesem angeordneten Ummantelung mit einem Wärmedurchlaßwiderstand des Schornsteins kleiner als 0,65 m²K/W unter Verzicht auf eine gesonderte Wärmedämmschicht, solange diese nur zur Verhinderung einer Taupunktunterschreitung vorgesehen ist. Letzteres ist insbesondere bei Schornsteinen für Niedertemperaturfeuerstätten möglich.

Ein Bausatz einer erfindungsgemäßen Fugenverbindung läßt sich aber auch auf die Herstellung eines mindestens dreischaligen Schornsteins anwenden, bei dem zwischen mindestens einem Rauchgasrohr und einer Stützummantelung eine Wärmedämmschicht, insbesondere aus Mineralwolle, mit etwas Radialspiel, insbesondere mit radialem Abstand zum Rauchgasrohr, angeordnet ist. Dabei kann von vornherein dem Eindringen von Feuchtigkeit durch die Fugen zwischen den Einzelrohren des Rauchgasrohres in die Wärmedämmschicht ganz oder mindestens teilweise vorgebeugt werden. Dies bietet auch Vorteile dann, wenn zum Abführen von Restfeuchte, die aus den Fugen oder von anderen Orten, z.B. Undichtigkeiten der Einzelrohre, herrührt, der Schornstein in an sich bekannter Weise hinterlüftet ausgebildet ist.

Bei modernen Schornsteinen ist oft die Fugengrenzfläche aufeinander folgender Einzelrohre des Rauchgasstranges mit einer Stufe ausgebildet, welche von innen nach außen ansteigend ausgebildet ist. Dadurch kann man unter anderem den Kriechweg für Feuchtigkeit längs der Fuge vergrößern, was jedoch wegen der kapillaren Kräfte üblichen Fugenmörtels nur bedingt Erfolg hat. Diese und andere Funktionen einer abgestuften Fugenausbildung können durch die Fugendichtung der erfindungsgemäßen Fugenverbindung ersetzt werden, so daß diese es ermöglicht, die fugenbildenden Stirnflächen der Einzelrohre in einem bevorzugten Anwendungsfall stumpf auszubilden. Das hat auch besondere Bedeutung bei dünnwandigen Rohren, bei denen der Raum für eine abgestufte Ausbildung von vornherein nicht oder nicht im ausreichenden Maße zur Verfügung steht und bei denen insbesondere gegebenenfalls doch vorgesehene Stufen an den Fugen leicht ausbrechen können. Eine stumpfe Fuge bietet demgegenüber sogar den Vorteil, die auftretenden Druckbelastungen über den ganzen Fugenquerschnitt gleichmäßig verteilen zu können, ohne daß es zu Abscherkräften wie bei einer Stufenfuge kommt.

Andererseits ist es zweckmäßig, die Stirnflächen der Einzelrohre dort, wo sie mit einer an der Fugendichtung ausgebildeten Verfugungskomponente zusammenwirken, abgekantet, vorzugsweise abgeschrägt, auszubilden. Ein Vorteil einer solchen Ausbildung liegt darin, die abgekanteten Bereiche als zusätzliche Dichtflächen im Zusammenwirken mit den radial über die Fugen überstehenden Teilen der vorgefertigten Fugendichtung der erfindungsgemäßen Fugenverbindung verwenden zu können. Außerdem wird die Zentrierung mittels zusätzlicher Zentrierungsmittel erleichtert, die außerhalb eines Einzelrohres in an sich bekannter Weise oder auch in Weiterbildung der Erfindung, worauf später noch eingegangen wird, vorgesehen sein können. Als bekannte Zentrierungsmittel seien die der DE-C1-35 04 446 oder der bereits erwähnten DE-C2-33 17 661 erwähnt.

Die Erfindung schafft ferner insbesondere die Möglichkeit, im Gegensatz zur bereits erwähnten Ausbildung der beiden Verfugungskomponenten der FR-A2-173 373 säurefesten Fugenmörtel als amorphe Verfugungsmasse gerade in den radial innen in der Fuge angeordneten Bereichen anzuordnen, wie dies bisher durchgängig über die ganze radiale Fugenerstreckung eines Rauchgasrohres üblich ist, um hohen Temperaturen und der Beaufschlagung mit aggressiven Säuren Rechnung zu tragen. Insoweit ergänzt die Erfindung die konventionelle Fugentechnik durch eine eigenständige zusätzliche Abdichtung gegen aggressive Feuchtigkeit und aggressive Dämpfe. Dabei wird innen dort, wo die hohen Temperaturen und die sauren Rauchgasbestandteile primär anfallen, eine diesen Bedingungen Rechnung tragende Verfugungskomponente eingesetzt, die zugleich die Festigkeit der Fugenverbindung gewährleisten kann, während die Abdichtfunktion gegen aggressive Feuchte und die Dämmfunktion gegen aggressive Dämpfe radial dahinter angeordnet wird und nur zur vollen Anwendung kommt, wenn es sich um Schornsteine mit Taupunktunterschreitung bereits im Rauchgasrohr handelt. In solchem Falle wird dann in Kauf genommen, daß diese Feuchtigkeit den üblichen säurefesten Fugenmörtel teilweise durchdringt. Im Falle der Anwendung in einem Schornstein mit Hochtemperaturfeuerstätte kann man es dabei sogar in Kauf nehmen, daß eine radial außen angeordnete nicht feuerfeste Verfugungskomponente im Dauerbetrieb unwirksam wird, so daß insoweit die erfindungsgemäße Fugendichtung dann praktisch auf den konventionellen Fugendichtungsfall reduziert wird. Es ist jedoch nicht mehr erforderlich, für beide Anwendungsfälle von Niedertemperaturfeuerstätten und Hochtemperaturfeuerstätten unterschiedliche Schornsteinauslegungen hinsichtlich der Fugendichtung zu wählen.

Es ist an sich möglich, die Funktion der verlorenen Schalung für mindestens eine amorphe Verfugungskomponente an der Fugendichtung unabhängig von der an ihr auch jeweils gebildeten vorgefertigten Verfugungskomponente auszubilden. Besonders bevorzugt ist jedoch eine Doppelfunktion einer an der Fugendichtung gebildeten Verfugungskomponente zugleich als verlorene Schalung. Das vereinfacht nicht nur den Aufbau der vorgefertigten Fugendichtung, sondern stellt sicher, daß die verlorene Schalung für die amorphe Verfugungskomponente die gesamte Höhe der Fuge einnehmen kann und daher diese voll sperrt.

Je nach der gewünschten Folge der Funktionen der unterschiedlichen Verfugungskomponenten innerhalb der Fuge, und gegebenenfalls auch im Hinblick auf die jeweils gewünschte Funktion einer verlorenen Schalung, wird man die von der vorgefertigten Fugendichtung gebildete Verfugungskomponente an der inneren oder äußeren radialen Seite der Fuge vorsehen; bevorzugt ist dabei im Hinblick auf die schon erörterte Möglichkeit des Einsatzes derselben Fugendichtung für Schornsteine mit Hoch- und mit Niedertemperaturfeuerstätte die Anwendung einer konventionellen an sich feuchtigkeitsdurchlässigen feuerfesten amorphen Verfugungskomponente radial innen und einer möglicherweise nicht so temperaturbeständigen, aber gegen Feuchtigkeit zuverlässig dichtenden Ausbildung einer vorgeformten Verfugungskomponente radial weiter außen. Die Anordnung der vorgefertigten Verfugungskomponente radial weiter außen ist auch im Hinblick auf deren radialen Überstand über die Fuge hinaus außen leichter und bequemer zu realisieren als radial innen, ohne die Anordnung mit radialem Überstand auch innen grundsätzlich ausschließen zu wollen.

Wenn im vorliegenden Zusammenhang von unterschiedlichen Verfugungskomponenten die Rede ist, sind solche mit unterschiedlichen Funktionen gemeint.Es ist also grundsätzlich auch möglich, dieselbe vorgeformte Verfugungskomponente radial innen und radial außen vorzusehen. Im Normalfall wird man jedoch wegen der unterschiedlichen Bedingungen im radial inneren und radial äußeren Fall dort unterschiedliche Verfugungskomponenten wählen. Eine Anordnung von vorgefertigten Verfugungskomponenten radial innen und radial außen kann aus verschiedenen Gründen vorgesehen sein, sei es zur entsprechenden Verteilung unterschiedlicher Dichtfunktionen, sei es zur Ausbildung einer beidseitigen verlorenen Schalung für amorphe Verfugungsmassen. Bei verlorenen Schalungen sowohl radial innen als auch radial außen ist dann auch die Aufbringung der amorphen Verfugungsmasse zwischen den beiden äußeren verlorenen Schalungen durch Ein- und Flachstreichen besonders bequem, ohne daß amorphe Masse überhaupt oder im Übermaß herausquillt. Wenn die verlorenen Schalungen dabei von nachgiebiger vorgeformter Verfugungskomponente gebildet sind, erhält man dabei zugleich unter der Kompressionslast der Einzelrohre im montierten Rauchgasrohr auch eine erwünschte Verdichtung der noch nicht erhärteten amorphen Masse.

Insbesondere für die radiale Innenseite der Fuge, aber auch allgemein, kann es zweckmäßig sein, für die verlorene Schalung auch ein zusätzliches Teil an der Fugendichtung gemäß der Erfindung vorzubilden. Das gilt insbesondere dann, wenn an einer bestimmten Seite der Fuge ein radialer Überstand vermieden werden soll. Das kann an der Innenseite der Fuge der Fall sein, wenn Überstände in unerwünschter Weise den freien Querschnitt des Rauchgasrohres oder das Kehren des Kamins behindern. An der radial äußeren Seite können Sonderfälle vorliegen, wie beispielsweise bei einer radial weiter außen eng anschließenden weiteren Schale, z.B. in Schornsteinsanierungsfällen mit von vornherein beschränktem Einbauquerschnitt in dem Altschornstein, so daß der im Rahmen der Erfindung vorgesehene radiale Überstand zweckmäßig radial innen vorgesehen wird.

Die vorgefertigte Fugendichtung der erfindungsgemäßen Fugenverbindung kann grundsätzlich auch mehrteilig vorgefertigt werden. Bevorzugt ist jedoch die Zusammenfassung zu einem vorgefertigten Bauteil.

Die vorgefertigte Fugendichtung der erfindungsgemäßen Fugenverbindung kann auch noch die Zusatzfunktion als Abstandhalter für die Fugenhöhe übernehmen. Hierfür kann man gegebenenfalls ein gesondertes Distanzstück an der Fugendichtung vorformen. Bevorzugt ist jedoch die Verwendung von hier gebildeter(n) Verfugungskomponente (n) als nachgiebiger Abstandhalter in unmittelbarer Mehrfachfunktion.

Eine von der vorgefertigten Fugendichtung der erfindungsgemäßen Fugenverbindung gebildete Verfugungskomponente kann nach einer in Betracht gezogenen Alternative aus üblichem elastisch-nachgiebigen Material bestehen. Dabei kommen beispielsweise für radial außen angeordnete vorgeformte Verfugungskomponenten gummielastische Stränge auf Naturkautschuk- oder Kunststoffbasis in Frage, die bei mindestens einer radial weiter innen angeordneten weiteren vorgeformten oder amorphen Verfugungskomponente temperaturmäßig mehr oder minder abgeschirmt sind. Dieser Abschirmungseffekt ist bei Niedertemperaturfeuerstätten ausreichend, während bei Hochtemperaturfeuerstätten dann eine allmähliche Zersetzung einer solchen vorgeformten Verfugungskomponente ohne Nachteile in Kauf genommen werden kann. Als radial innen angeordnete vorgeformte Fugendichtung bietet sich beispielsweise eine Dichtschnur aus mineralischen oder keramischen Fasern an. Unter mineralischen Fasern werden dabei insbesondere solche aus Mineralwolle, Steinwolle sowie aus Glas- und Quarzfasern in Betracht gezogen. Eine elastischnachgiebige Verfugungskomponente hat den Vorteil, daß die Dichtwirkung durch Kompression dieser Verfugungskomponente in der Fuge dauerhaft aufgrund des Gewichtes des oberhalb der Fuge montierten Rohrstranges aufgebaut wird und nach Erhärten der amorphen Fugenmasse weiter wirksam bleibt.

Die Erfindung zieht aber auch die Vorformung mindestens einer plastisch-nachgiebigen Verfugungskomponente in Betracht. Diese kann im Grenzfall nach Art eines Zahnpastastranges frei ausgelegt werden, sofern die Verformung der Fugendichtung selbst sicherstellt, daß das Material dieser vorgeformten Verfugungskomponente nicht vorzeitig unbestimmt zerquetscht wird oder zerfließt. Das kann man beispielsweise durch gesondert vorgesehene Fugendistanzhalter erreichen.

Besonders bevorzugt ist jedoch, daß eine solche Fugendichtung von einem Stützkorsett gehalten ist, eine Maßnahme, die man im übrigen auch bei elastisch-nachgiebigen Verfugungskomponenten zusätzlich anwenden kann. Ein solches Stützkorsett verbessert die Handhabbarkeit der vorgefertigten Fugendichtung und sichert außerdem die Funktionsfähigkeit der an ihr vorgeformten Verfugungskomponente selbst dann, wenn diese vom Grundmaterial her sehr nachgiebig oder gar plastisch ist. Verschiedene Möglichkeiten eines solchen Stützkorsetts, die einzeln oder gemeinsam vorgesehen sein können, sind in den Ansprüchen 20 bis 31 und 47 angegeben.

Der Querschnitt einer von der Fugendichtung gebildeten vorgeformten Verfugungskomponente kann nach Art eines konventionellen O-Ringes, oder auch des bereits erwähnten Zahnpastastranges, kreisflächenartig geformt sein. Dabei wird eine linienartige Anlage gewährleistet, die bei manchen Dichtmaterialien erwünscht ist, insbesondere elastisch-nachgiebigen. Aber auch die Verformungsarbeit der vorgeformten Dichtung bei deren Einbau in relativ engen Fugen wird dabei gegenüber rechteckartig die Fuge erfüllenden Anteilen der vorgefertigten Dichtungskomponente verringert. Dabei kann man kreisflächenartige Verfugungskomponenten relativ tief eindrücken und so bei elastischem Material den elastischen Dichtungsdruck und bei plastischem Material dessen Wechselwirkung mit den Fugengrenzflächen verbessern. Außerdem kann in zentralen Bereichen der Fuge das amorphe Material relativ weit radial nach außen bzw. nach innen reichen und so einen sehr hohen Anteil der radialen Fugenweite beaufschlagen und dadurch eine gute Kraftübertragung zwischen den benachbarten Einzelrohren gewährleisten. In den radial überstehenden Bereichen kann man den Materialaufwand der vorgeformten Verfugungskomponente relativ klein halten. Schließlich kann man auch solche elastisch-nachgiebig vorgeformte Verfugungskomponenten leicht in einen äußeren Halteumfang eines entsprechenden Stützkorsetts einschnappen lassen. Auch haben runde Querschnitte sehr gute Formsteifigkeit gegen radiale Querkräfte.

Es kommen aber auch andere querschnitte einer von der Fugendichtung gebildeten vorgeformten Verfugungskomponente in Frage, insbesondere quadratische oder mit radialer oder axialer Erstreckung rechteckige oder ovale Querschnitte.

Bevorzugte Bemessungsbereiche der vorgeformten Fugendichtung der erfindungsgemäßen Fugenverbindung sind in den Ansprüchen 12 bis 15 angegeben. Die Bemessung nach Anspruch 13 stellt dabei einen Teilbereich von Anspruch 12 insbesondere für den Fall dar, daß der querschnitt der von der Fugendichtung gebildeten Verfugungskomponente kreisflächenartig geformt ist; denn dann hat der radial überstehende Teil der von der Fugendichtung gebildeten Verfugungskomponente von selbst auch einen gewissen axialen Überstand über die natürliche Fugenbreite mit verschiedenen Vorteilen. Zum einen kann man diesen Überstand zur Vergrößerung des Dichtwegs längs der Fuge von radial innen nach radial außen nutzen, beispielsweise durch Anlage von Übergangsbereichen an angekanteten Ecken der Einzelrohre. Zum anderen kann man den Überstand für eine relative Einzelrohrzentrierung nutzbar oder mit anderen Zentrierungsmitteln zusammen mit nutzbar machen, etwa im Wege einer Feinzentrierung. Für die erweiterte Abdichtfunktion kann man dabei gegebenenfalls die Abkantung am Rohr auch entsprechend profilieren.

Das im Anspruch 42 angegebene spezielle plastischnachgiebige Material ist unter dem Gesichtspunkt noch relativ hoher Temperaturbeständigkeit ausgewählt. Die Plastizität kann dabei gemäß Anspruch 43 verbessert werden.

Die Ansprüche 44 bis 46 befassen sich mit der Besonderheit, den Dichtring nicht nur mechanisch mit den Einzelrohren bzw. Stützhülsen zu verbinden, sondern zusätzlich auch noch eine chemische Verbindung eingehen zu können, wie es an sich bei Fugenkitten möglich ist.

Die Fugendichtung der erfindungsgemäßen Fugenverbindung kann in allen Ausführungsarten zusätzlich auch noch als radialer Abstandhalter zwischen dem Rauchgasrohr und einer mit radialem Abstand folgenden änßeren Schale, vorzugsweise der Ummantelung eines zweischaligen Schornsteins, ausgebildet sein. Ein solcher radialer Abstandhalter spezieller Formgebung, der jedoch von der Ummantelung getragen ist, ist an sich aus der AT-B-384 263 bekannt.

Allgemein gilt: Bei nicht runden Einzelrohren, insbesondere rechteckigen, tritt an die Stelle der radialen Maßangaben sinngemäß eine Bezugnahme auf die Wandstärke der Einzelrohre bzw. die Richtung rechtwinklig zu deren Wand. Bevorzugt wird die Fugendichtung der erfindungsgemäßen Fugenverbindung jedoch in bezug auf runde Einzelrohre vorgefertigt und die Dichtringe sind dann entsprechend selbst kreisringförmig und vorzugsweise zentralsymmetrisch ausgebildet.

Es ist auch allgemein zweckmäßig, wenn vorgeformte Verfugungskomponente(n) und/oder gesonderte verlorene Schalung(en) der vorgeformten Fugendichtung aus einem Stück bestehen und ringartig geschlossen umlaufend, vorzugsweise mit gleichbleibendem Querschnitt, ausgebildet sind.

Die vorgeformte Fugendichtung der erfindungsgemäßen Fugenverbindung kann ganz allgemein auch ein Element eines Bausatzes bilden, das zusammen mit den auch vorgefertigten Einzelrohren und einer nachträglich aufzubringenden ein- oder mehrkomponentigen amorphen Verfugungsmasse zur Herstellung des innen liegenden Rauchgasrohres eines mehrschaligen Hausschornsteins verwendet wird. Es kommen dabei sowohl die bekannten Stirnflächenausbildungen benachbarter Einzelrohre als auch insbesondere die in den Anprüchen 49 und 50 besonders hervorgehobenen Stirnflächenausbildungen in Frage. Auch sind bausatzmäßig die Einzelrohre im Rahmen von Anspruch 48 und des Anwendungsanspruchs 54 weitergebildet.

Die Erfindung wird im folgenden anhand schematischer Zeichnungen an mehreren Ausführungsbeispielen noch näher erläutert.

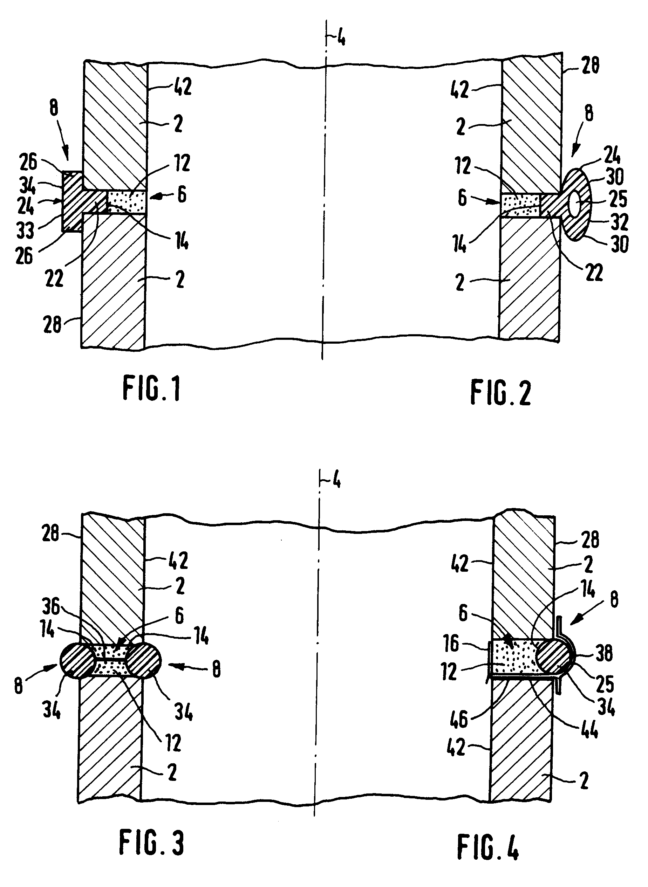

Bei allen Figuren 1 bis 16 wird dabei die Erfindung ausschnittsweise im bereits montierten Zustand veranschaulicht, bei dem die nach der Erfindung vorgesehenen vorgefertigten Fugendichtungen bereits mindestens teilweise in einer Fuge zwischen axial aneinander anschließenden einschaligen Einzelrohren angeordnet sind, welche sich zu dem entsprechenden einschaligen Rauchgasrohr eines mehrschaligen Hausschornsteins ergänzen, dessen andere(n) Schale(n) nicht dargestellt ist bzw. sind.

Die Fig. 1 bis 10 betreffen dabei im folgenden entsprechend fortlaufend numerierte verschiedene Ausführungsbeispiele. Im ganzen sind also zehn Ausführungsbeispiele dargestellt.

Die Fig. 11 veranschaulicht unter Bezugnahme auf das dritte Ausführungsbeispiel der Fig. 3, jedoch ohne Beschränkung der Allgemeinheit, die Ausbildung der vorgefertigten Fugendichtung in einer weiteren Ausgestaltung als Distanzhalter gegenüber einer mit radialem Abstand das Rauchgasrohr umgebenden Mantelschale eines zweischaligen Hausschornsteins, wobei in diesem Sonderfall die Mantelschale mit dargestellt ist.

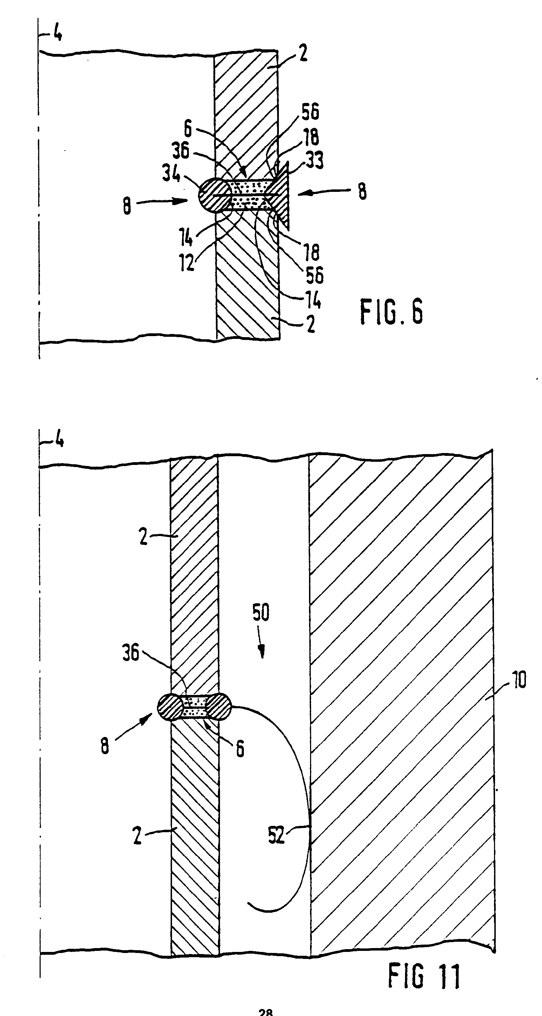

Alle Figuren 1 bis 11 stellen dabei radiale Halbschnitte durch das Rauchgasrohr im Bereich der eine Fuge bildenden Enden zweier benachbarter Einzelrohre, und im Falle der Fig. 11 auch noch der den dargestellten Bereich umgebenden Ummantelung, dar.

Der Begriff "radialer Halbschnitt" bezieht sich dabei sinngemäß auf kreisrunde Einzelrohre und entsprechend kreisrunde vorgefertigte Dichtungen. Im Falle der auch in Betracht gezogenen Konfigurationen mit nicht kreisrunden Einzelrohren, insbesondere solchen mit streng oder angenähert rechteckigem Querschnitt, ist der Umfangsverlauf der Fugen und der vorgefertigten Fugendichtungen entsprechend, in den genannten Beispielen also streng oder angenähert rechteckig. In solchen Fällen ist dann der Begriff "radialer Halbschnitt" als Schnittdarstellung rechtwinklig quer zur Wand des betreffenden Einzelrohres oder Rauchgasrohres und im Falle der Darstellung von Fig. 16 der äußeren Ummantelung zu verstehen, wenn auch diese unrund ausgebildet ist.

Im allgemeinen ist an eine gleichartige Ausbildung der Fugenverbindung rings um das Rauchgasrohr gedacht, ohne besondere Umstände ausschließen zu wollen, in denen die Fugenverbindung längs des Umfangs der Fuge unterschiedlich gestaltet ist.

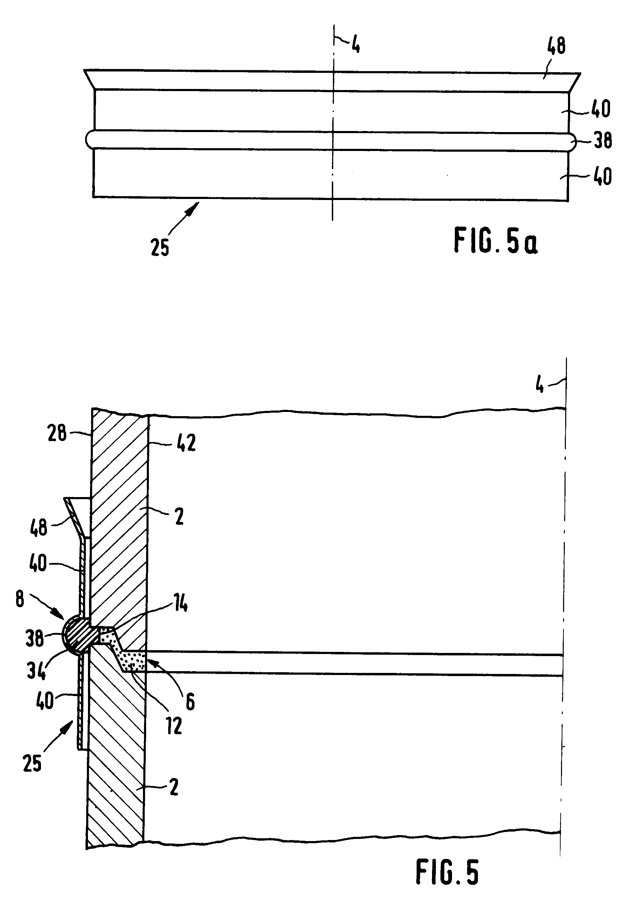

Fig. 5a schließlich stellt in verkleinertem Maßstab von 1:2 eine Draufsicht auf ein Stützkorsett in Form einer Umfangsummantelung der vorgefertigten Fugendichtung gemäß Fig. 5, die hier über die ganze Breite der Stützummantelung und nicht nur als Halbdarstellung wiedergegeben ist, dar.

Die Einzelrohre 2 haben jeweils die strichpunktiert dargestellte gedachte Achse 4 und schließen jeweils an einer Fuge 6 axial aneinander an. Mit der durchlaufenden Darstellung der Achse 4 wird deutlich gemacht, daß die Einzelrohre dabei im Idealfall längs des Rauchgasrohres fluchtend montiert werden. In der Praxis treten jedoch bei der Montage gewisse Fluchtungsfehler auf, die jedoch durch die insbesondere axiale Nachgiebigkeit mindestens einer vorgeformten Verfugungskomponente der mindestens teilweise in der Fuge angeordneten Fugendichtung 8 dichtend, insbesondere feuchtigkeitsdichtend, ausgeglichen werden kann.

Die im Bereich einer Fuge 6 aufeinander folgenden beiden benachbarten Einzelrohre 2 sind dabei jeweils mit unterschiedlicher Schrägschraffur dargestellt. Ebenso ist in Fig. 11 die Ummantelung 10 des dort ausdrücklich gezeichneten zweischaligen Schornsteins mit Schrägschraffur dargestellt. Mit dieser Schrägschraffur sollen Materialien, wie Schamotte, sonstige Keramik, Glas einschließlich Quarz oder Leichtbeton, für die Einzelrohre 2 und die üblichen Materialien einer äußeren Ummantelung eines mehrschaligen, insbesondere zweischaligen, Schornsteins, hier insbesondere Leichtbeton, besonders angesprochen sein. Es ist jedoch auch die Herstellung der Einzelrohre und/oder der Ummantelung aus anderen Materialien, insbesondere aus Stahl, nicht ausgeschlossen. Bei der Darstellung nach Fig. 11 kann ferner mindestens eine weitere nicht dargestellte Schale innen oder außen hinzugedacht werden.

Während die axiale Bemessung der Fugen 6 in bezug auf die Abmessungen der Einzelrohre, insbesondere deren Wandstärke, ohne Beschränkung der Allgemeinheit auch realistische Verhältnisse ausdrücklich mit einbeziehen, ist in Fig. 11 der Abstand zwischen dem von den Einzelrohren 2 gebildeten Rauchgasrohr und der Ummantelung 10 rein schematisch gedacht, ohne auch hier eine exakte maßstabgerechte Realisierung ausschließen zu wollen. Im Regelfall wird jedoch der betreffende Abstand in der Praxis meist kleiner ausfallen.

Die nachgiebigen vorgeformten Verfugungskomponenten der vorgeformten Fugendichtungen 8 sind jeweils mit schräger Gitterschraffur dargestellt und bilden in den Sonderfällen der Fig. 1 sowie 7 bis 9 jeweils selbst die ganze vorgefertigte Fugendichtung 8.

Ferner sind die vorgefertigten Verfugungskomponenten aller dargestellten Ausführungsbeispiele an einem gemeinsamen Baukörper vorgefertigt gezeigt.

Innerhalb der Fugen 6 ist ferner jeweils eine punktiert dargestellte amorphe aushärtende Masse 12 dargestellt, die im noch nicht erhärteten oder im erhärteten Zustand verstanden werden kann. Etwa aus der Fuge nach außen oder innen bei der Montage herausgequollene Anteile der amorphen Masse 12 sind der Einfachheit halber weggelassen. Diese kann gegebenenfalls aus mehreren radial - oder wenigstens längs des Kriechweges vom Inneren des Rauchgasrohres durch die Fuge 6 nach außen aufeinander folgenden - unterschiedlichen Verfugungskomponenten zusammengesetzt sein; insbesondere wird jedoch an die Verwendung einer einzigen amorphen aushärtenden Verfugungskomponente 12 gedacht, wie vorzugsweise Säurefesten Fugenkitt.

Ein solcher Säurefester Fugenkitt ist beispielsweise in Römpps Chemie-Lexikon, 7. Auflage, Band 5, Seite 3038, unter dem Stichwort "Säurekitte" näher spezifiziert.

Soweit bei den einzelnen Ausführungsbeispielen ferner die vorgeformten Verfugungskomponenten in zusammenhängender schräger Gitterschraffur dargestellt sind, ist ohne Beschränkung der Allgemeinheit insbesondere von dem Fall ausgegangen, daß es sich dabei um ein Material und nicht qualitativ um eine Zusammensetzung aus unterschiedlichen Verfugungskomponenten längs des Kriechweges durch die Fuge handelt, was aber auch in Frage kommt.

Insbesondere insoweit, als hier eine plastischnachgiebige Verfugungskomponente angesprochen ist, wird dabei an eine Fertigung aus dem Material gedacht, welches in "Gardener's Chemical Synonymes and Trade Names", 9. Auflage, Gower Technical Press, S, 141, unter dem Stichwort "Butyl Rubber" angesprochen ist. Ansonsten kommen bei allen Ausführungsbeispielen für die an der vorgeformten Fugendichtung 8 vorgeformte nachgiebige Verfugungsmasse alle früher schon erörterten elastisch-nachgiebigen und plastisch-nachgiebigen Materialien in Frage.

Soweit im Falle der Fig. 3, 6 und 11 die mit schräger Gitterschraffur dargestellten vorgeformten Verfugungskomponenten getrennt voneinander angeordnet sind, kann es sich sowohl um gleiche Verfugungskomponenten, also solche mit gleichen Verfugungseigenschaften, als auch solche mit unterschiedlichen Verfugungseigenschaften handeln, wobei im letztgenannten Fall innen beispielsweise eine Ausbildung aus einem hochtemperaturfesten Material und außen aus einem weniger hochtemperaturfesten Material in Frage kommt.

Bei allen dargestellten Ausführungsbeispielen bildet ferner die an der jeweiligen Fugendichtung 8 ausgebildeten Verfugungskomponente innerhalb der Fuge 6 eine außen liegende verlorene-Schalung 14 und in den Fällen der Fig. 3 einschließlich 11 und 6 zusätzlich auch noch eine weitere innen liegende verlorene Schalung 14 für die amorphe Masse 12. Im Fall der Fig. 4 ist stattdessen eine innen liegende zusätzliche verlorene Schalung 16 vorgesehen, die als Bestandteil der vorgeformten Fugendichtung gesondert, aber vorzugsweise als gemeinsamer Baukörper, mit den anderen Elementen der Fugendichtung 8 vorgefertigt wird. Eine entsprechende zusätzliche verlorene Schalung 16 kann auch im Fall der Ausführungsbeispiele zusätzlich vorgesehen sein, bei denen allein eine äußere verlorene Schalung dargestellt ist oder stattdessen eine vorgeformte nachgiebige Verfugungskomponente die innere verlorene Schalung bildet.

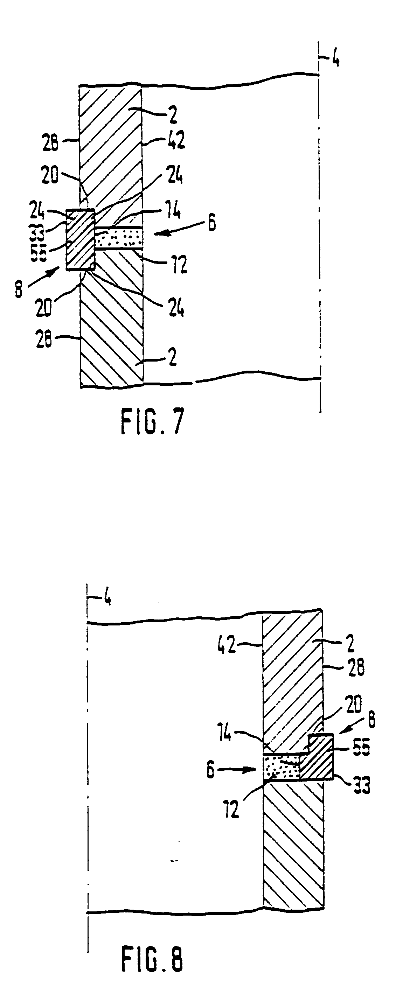

Ebenso ist es denkbar, daß die als äußere verlorene Schalungen 14 dargestellten Fugendichtungen 8 in umgekehrter Anordnung bezüglich der Fuge auch als innere verlorene Schalungen vorgesehen werden können bzw. bei solchen Anordnungen, bei denen äußere und innere verlorene Schalungen 14 und/oder 16 vorgesehen sind, die unterschiedliche Gestaltung oder Materialien haben, die Anordnung innen und außen an der Fuge ausgetauscht wird. Dementsprechend könnte beispielsweise bei der Anordnung nach Fig. 4 die gesonderte verlorene Schalung 16 außen und die von der vorgeformten Verfugungskomponente gebildete verlorene Schalung 14 innen an der Fuge angeordnet sein oder die Formgebung der vorgefertigten Fugendichtung gemäß Fig. 6 bezüglich Anordnung innen und außen an der Fuge umgekehrt werden.

Bei den Ausführungsbeispielen der Fig. 1 bis 4 und 16 sind die fugenbildenden gegenüberliegenden Stirnflächen der Einzelrohre 2 über die ganze Wandstärke stumpf ausgebildet. Fig. 5 zeigt demgegenüber eine Ausbildung mit konventioneller Stufenfuge. In Fig. 6 schließlich ist eine im wesentlichen von stumpfen gegenüberliegenden Stirnflächen der Einzelrohre 2 begrenzte Fuge 6 außen etwas erweitert, indem die gegenüberliegenden Außenkanten der Einzelrohre ohne Beschränkung der Allgemeinheit, jedoch in bevorzugter Gestaltung, mit Abschrägungen 18 versehen sind.

Die Ausbildungen der Einzelrohre 2 mit stumpfen oder mit im wesentlichen stumpfen Stirnflächen ist im Rahmen der Erfindung bevorzugt, während aber auch die Ausbildung dieser Stirnflächen in anderer Form, insbesondere mit einer konventionellen Stufenfuge nach Fig. 5, in Frage kommt. Die Ausbildung der Fugendichtungen 8, die im Zusammenhang mit stumpfen Stirnseiten der Einzelrohre dargestellt sind, können entsprechend auch bei Ausbildung der Fugen 6 als Stufenfugen vorgesehen werden, und umgekehrt.

Das Ausführungsbeispiel der Fig. 6 beschreibt dabei bereits einen Übergang in eine spezifische Weiterbildung der Stirnseiten der Einzelrohre im Rahmen nach der Erfindung gemäß den Fig. 7 bis 10, bei denen jeweils an der Fuge erfindungsspezifische axiale Zurücksetzungen 20 ausgebildet sind, in welche bei allen Ausführungsbeispielen vorgeformte Verfugungskomponenten der Fugendichtung 8 komplementär eingreifen.

Die gezeigten Ausführungsbeispiele betreffen alle Ausführungsformen, bei denen jeweils noch eine vorgeformte Verfugungskomponente mindestens an einer Seite der Fuge 6 radial (bzw. senkrecht zur Wand der Einzelrohre) hervorsteht, und entsprechendes gilt für die Darstellung der von Fig. 3 abgeleiteten Fig. 11.

Im sinngemäßen Übergang der Fig. 6 und speziell in den Fällen der Fig. 7 bis 10 greifen demgegenüber vorgeformte Verfugungskomponenten der Fugendichtung 8 in die erwähnten axialen Zurücksetzungen der Einzelrohre 2 komplementär ein. Bei den Ausführungsformen der Fig. 6 bis 10 ist dabei ein solcher axialer Eingriff mit einem zusätzlichen, insbesondere radialen, Überstand über die Fuge 6 kombiniert.

Bei allen Ausführungsbeispielen ist ohne Beschränkung der Allgemeinheit ferner die Fuge 6 im wesentlichen vollständig von vorgeformter Fugendichtung 8 und amorpher Masse 12 erfüllt.

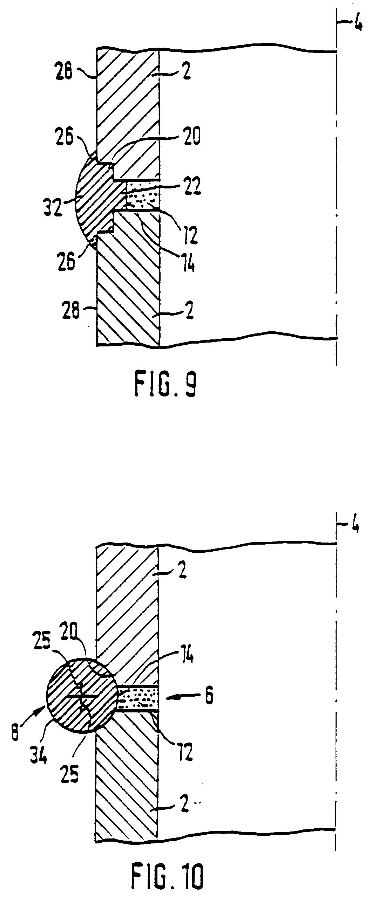

Bei den Ausführungsformen der Fig. 2 und 10 ist ferner in bezug auf einem aus der Fuge hervorstehenden Bereich vorgeformter Verfugungskomponente der Fugendichtung 6 ein inneres und im Fall der Fig. 4 und 5 ein äußeres Stützkorsett 22 für an der vorgeformten Fugendichtung 6 vorgeformte nachgiebige Verfugungskomponente dargestellt. Solche und andere früher erörterte Stützkorsette 25 können jedoch bei den genannten Ausführungsbeispielen auch weggelassen sein. Andererseits kann man auch in den Fällen, in denen kein Stützkorsett dargestellt ist, dieses zusätzlich vorsehen. Stützkorsette, die innerhalb der vorgeformten Verfugungskomponente angeordnet werden oder als Ummantelung ausgebildet sind, können in nicht dargestellter Weise dabei auch bei solchen vorgeformten Fugendichtungen vorgesehen sein, die nur innerhalb der Fuge 6 angeordnet sind.

Es kann auch das Stützkorsett der Fig. 4 und 5 sinngemäß innen an der Fuge angeordnet werden, wenn dort eine vorgeformte Verfugungskomponente der Fugendichtung 8 vorgesehen ist.

Durch die Darstellung der erfindungsgemäßen Fugenverbindung im bereits montierten Zustand wird besonders deutlich, wie die Fugendichtungen 8 und die Einzelrohre 2 in ihrer gegenseitigen Ausbildung und Bemessung bausatzmäßig zusammenwirken.

Nach diesen allgemeinen Betrachtungen seien nunmehr die verschiedenen dargestellten konkreten Ausführungsbeispiele im einzelnen besprochen.

Bei dem ersten Ausführungsbeispiel bildet die Fugendichtung 8 insgesamt eine einzige vorgeformte Verfugungskomponente mit einem T-förmigen Profil. Der Mittelsteg 22 dieses Profils hat rechteckigen Querschnitt und bildet dementsprechend bei einem beispielsweise runden Querschnitt der Einzelrohre einen Flachring, der von der verlorenen Schalung 14 aus, welche von dem Innenrand dieses Flachrings gebildet ist, den ganzen außen gelegenen Bereich der Fuge 6 einnimmt. Der Querbalken 24 dieses Profils schließt unmittelbar am äußeren Ende der Fuge 6 an und bildet zwei Dichtlippen 26, die jeweils dichtend mit der Außenfläche 28 des jeweiligen Einzelrohres 2 zusammenwirken. Auch der Querbalken 24 hat rechteckigen Querschnitt, vorzugsweise denselben wie der Mittelsteg 22.

Vorzugsweise sind die Längen des Mittelstegs 22 und die von dessen Verlängerung in den Querbalken 24 ausgerechneten Überstände der Dichtlippen 26 etwa gleich lang gewählt.

Dieses Grundprofil kann in mannigfacher Weise abgeändert werden, wie anhand der nachfolgenden Ausführungsbeispiele deutlich wird.

So weist das zweite Ausführungsbeispiel der Fig. 2 ebenfalls ein im großen T-förmiges Profil mit demselben Mittelsteg 22 wie beim ersten Ausführungsbeispiel auf. Der Querbalken 24 dieses Profils hat jedoch ein in Achsrichtung oval langgestrecktes Profil.

Der Dichtlippencharakter der beiden Arme 30 dieses Profils ist dabei reduziert. Gegenüber der Ausführungsform nach Fig. 1, bei der die volle Länge der Dichtlippen als zusätzliche Dichtfläche gewonnen wird, wird jedoch bei dem zweiten Ausführungsbeispiel der Vorteil gewonnen, daß die Arme 30 sich von der jeweiligen fugenbildenden Kante des Innenrohres aus axial nach außen erstrecken und so ohne Notwendigkeit eines Zusatzteils einen Zentrierungstrichter bilden.

Dessen Formsteifigkeit wird durch die zentrale Auswölbung 32 des ovalen Gesamtquerschnitts weiter verstärkt.

Mit einer entsprechenden Auswölbung 32 kann man auch die zur Außenfläche 28 parallele Außenfläche 33 des Querbalkens 24 der ersten Ausführungsform abwandeln und dabei im Grenzfall so weit gehen, daß die von dem Querbalken 24 gebildeten Dichtlippen 26 auf eine Stärke von praktisch null zurückgehen (vgl. die entsprechende Dichtlippengestalt in Fig. 11).

Bei dem zweiten Ausführungsbeispiel ist in den ovalen Querschnitt des Querbalkens 24 noch ein Stützkorsett 25 eingesetzt, das hier ohne Beschränkung der Allgemeinheit, aber in bevorzugter Weise etwa mathematisch ähnlich oval als massiver Kern geformt ist, der zentral im Querbalken mit derselben axialen Erstreckung des Ovals angeordnet ist.

Aus dem dritten Ausführungsbeispiel kann man zunächst lernen, daß es nicht erforderlich ist, daß der Mittelsteg 22 des ersten und zweiten Ausführungsbeispiels mit einem Stufenende in die Fuge ragt, wie dies bei den Fig. 1 und 2 gezeigt ist.

Vielmehr kann die Stirnfläche auch gerundet, beispielsweise kreisbogenförmig geformt, sein.

Dies wird beim dritten Ausführungsbeispiel dadurch verdeutlicht, daß die Grundform der Fugendichtung 8 die eines O-Ringes ist, dessen in die Fuge 6 weisende Kontur kreisringförmig ausgebildet ist.

Darüber hinaus ist auch die außerhalb der Fuge gelegene Kontur des O-Rings kreisringförmig geformt unter Verzicht auf die Dichtlippen 26 bzw. Arme 30 der ersten bzw. zweiten Ausführungsform.

Darüber hinaus sind sowohl an der Innenseite als auch an der Außenseite der Fuge 6 je ein O-Ring 34 vorgesehen, die durch zentral in der Fuge 6 verlaufende und über den Umfang der Fuge 6 verteilte Stege 36 zu einer Baueinheit miteinander verbunden sind. Die Stege 36 können dabei aus demselben Material der O-Ringe 34 bestehen. Vorzugsweise sind jedoch bei diesem Ausführungsbeispiel und allgemein dann, wenn derartige Stege 36 räumlich getrennte Verfugungskomponente(n) aus gleichem oder unterschiedlichem Material zu einer Baueinheit verbinden, die Stege 36 aus andersartigem Material gebildet, insbesondere aus nicht nachgiebigem abstandhaltendem Material.

Alternativ kann man auch die Stege 36 fortlassen und zwei einzelne O-Ringe 34 vorsehen.

Die bisher besprochenen drei Ausführungsbeispiele 1 bis 3 sind gemäß der zeichnerischen Darstellung vorzugsweise symmetrisch zu einer Mittelebene gestaltet, die bei den dargestellten stumpfen Fugen der Einzelrohre 2 in denselben Ausführungsbeispielen im Montagezustand zugleich die Mittelebene der Fuge 6 ist. Dies bietet den Vorteil, die vorgeformte Fugendichtung 6 invariant bezüglich ihrer Achsorientierung montieren zu können.

Eine entsprechende Symmetriebedingung kann auch bei allen anderen später noch beschriebenen Ausführungsbeispielen aus demselben Grunde gewährleistet sein, sofern nicht ausdrücklich eine unsymmetrische Ausbildungsform beschrieben wird.

Eine derartige unsymmetrische Gestaltung zeigt die vierte Ausführungsform. Bei dieser ist nur ein einziger O-Ring 34 an der Außenseite der Fuge 6 angeordnet. Mit seinem aus der Fuge 6 außen hervorstehenden Bereich greift dabei der O-Ring komplementär in eine Rille 38 mit kreisbogenförmiger Begrenzung ein, welche aus einem Flachmaterial geformt ist, das sich über und unter der Fuge mit überstehenden Randflanschen 40 fortsetzt, welche die Außenfläche 28 der beiden Einzelrohre 2 eng oder möglichst nur mit relativ kleinem gegenseitigen Abstand umgeben. Die Flansche 40 können dabei zur gegenseitigen axialen Zentrierung der an der Fuge 6 aneinander anschließenden Einzelrohre 2 mit nutzbar gemacht werden.

Insoweit kann die Fugendichtung 8 immer noch die zuvor erwähnte Symmetriebedingung erfüllen, wobei dann die Flansche 40 gleiche axiale Höhe aufweisen.

Eine Unsymmetrie ist jedoch durch die Anordnung der zusätzlichen verlorenen Schalung 16 gegeben. Diese ist etwa in Fluchtung mit der Innenfläche der aneinander anschließenden Einzelrohre 2 angeordnet und von einem aufwärts weisenden Winkel eines Winkelprofils aus Flachmaterial gebildet, dessen horizontaler Steg 44, zweckmäßig in Ausbildung mit über den Umfang verteilten und zwischen sich Freiräume für die amorphe Masse 12 bildenden Einzelstegen eine Auflagerung 46 auf der oberen Stirnseite des im Montagezustand unteren Einzelrohres 2 bildet. Diese Auflagerung 46 kann von dem Stützkorsett 25, welches durch Rille 38 und Flansche 40 gebildet ist, zu einer einstückigen Baueinheit verbunden sein. Man kann aber auch eine gesonderte Anordnung im Rahmen der vorgefertigten Fugendichtung 8 vorsehen.

In nicht dargestellter Abwandlung könnte sich der horizontale Steg 44 auch in anderer Weise in der Höhe der Fuge 6 erstrecken, beispielsweise auch schräg verlaufend und anders als dargestellt an das obere Ende der verlorenen zusätzlichen Schalung 16 angeschlossen. Dann könnte man durch eine entsprechende Abwinklung eine nur teilweise Auflagerung 46 bilden, gegebenenfalls sogar unter Anformung von Füßen. Durch derartige Ausführungsformen kann jedoch die Aufbringung der amorphen Masse 12 u.U. kompliziert werden, so daß die dargestellte Anordnung als besonders vorteilhaft angesehen wird.

In den Fig. 3 und 4 und insbesondere auch in Fig. 5 ist ferner angedeutet, daß sich die außen liegenden Ecken der Stirnfläche der Einzelrohre 2 im endgültigen Montagezustand in den jeweiligen nachgiebigen O-Ring mehr oder minder weit eindrücken können.

Insbesondere ist auch an solche Ausführungsformen gedacht, bei denen mehr als 50 % des O-Rings außerhalb der Fuge außen (und im Fall der Fig. 3 gegebenenfalls auch innen) vorstehen.

Ansonsten zeigt die Ausführungsform nach Fig. 5 den grundsätzlich gleichen Aufbau der Fugendichtung 8 wie in Fig. 4, allerdings ohne die Anordnung der zusätzlichen verlorenen Schalung 16. Andererseits ist mindestens der im Montagezustand obere Flansch 40 noch mit einem sich zusätzlich konisch nach außen erweiternden Zentrierungstrichter 48 fortgesetzt, der anders als im Fall der Fig. 2 eine Zentrierungstrichterfunktion nicht innerhalb der vorgeformten nachgiebigen Verfugungskomponente des zweiten Ausführungsbeispiels, sondern relativ starr am Stützkorsett 25 selbst ausbildet. Dadurch wird es vereinfacht, eine größere Länge zur Grobzentrierung vorzusehen. Eine Feinzentrierung kann dann immer noch an nach außen und oben ragenden Bereichen von nachgiebiger Verfugungskomponente vorgesehen sein.

Außerdem zeigt ein Vergleich der Fig. 5 und 4, daß der zusätzliche Zentrierungstrichter 48 es erleichtert, die Einzelrohre in den jeweils an den Zentrierungstrichter 48 anschließenden Flansch 40 relativ eng zentriert über eine relativ große axiale Länge einführen zu können.

Das sechste Ausführungsbeispiel wandelt die dritte Ausführungsform ab, indem an die Stelle des äußeren O-Rings 34 ein Ring mit dreieckigem Profil vorgesehen ist, wobei insbesondere das dargestellte gleichschenklige Dreieck gebildet wird. Wie beim ersten Ausführungsbeispiel ist dabei von der Basis des Dreiecks eine zur Außenfläche 29 der Einzelrohre 2 parallele Ebene gebildet, während die beiden Schenkel des Dreiecks jeweils einen geradlinig konischen Trichter an der vorgeformten Verfugungskomponente der Fugendichtung 8 selbst ausbilden. Dabei wird der Gedanke, eine Zentrierungskomponente auszubilden, von der zweiten Ausführungsform übernommen, während die gerade Trichterausbildung von der fünften Ausführungsform übernommen wird, wo diese gerade Trichterausbildung an dem Zentrierungstrichter 48 aufgezeigt ist. Es versteht sich dabei, daß dieser Zentrierungstrichter 48 an sich auch ein Zentrierungstrichter sein kann, bei dem die Zentrierungsfläche gerundet ist.

Das dreieckige Profil der sechsten Ausführungsform ist dabei nicht auf eine Weiterbildung der Fig. 3 beschränkt, sondern kann in allen anderen Fällen Anwendung finden, bei denen innen oder außen an der Fuge in anderen Ausführungsbeispielen ein O-Ring vorgesehen ist.

In Fig. 11 ist - ohne Beschränkung der Allgemeinheit - anhand der dritten Ausführungsform gezeigt, daß die vorgeformte Fugendichtung auch noch einen radialen Abstandhalter 50 des von den Einzelrohren 2 gebildeten Rauchgasrohres und einer dieses im Abstand umgebenden Ummantelung 10 tragen kann.

Der Abstandhalter 50 ist dabei in Fig. 11 von der Fugendichtung 8 aus mit Erstreckung nach unten und tiefer liegender Anlagezone 52 an der Ummantelung 10 als der Höhe der Fuge 6 gezeigt, innerhalb derer die Fugendichtung 8 angeordnet wird. Es besteht jedoch auch die manchmal sogar bevorzugte Alternative, den Abstandhalter nach oben mit höher liegender Anlagezone 52 zu orientieren. Der Abstandhalter 50 ist vorzugsweise ein Federelement, das hier in bevorzugter Gestalt etwa C-förmig dargestellt ist. Zweckmäßig sind dabei mehrere derartige Abstandhalter mit nicht zu großer Umfangserstrekkung über den Umfang der Fugendichtung 8 verteilt. Sie können beispielsweise aus Federstahlbändern bestehen und sind an ihrem einen Ende, wie dargestellt, vorzugsweise mit einer stützenden Einlage der Fugendichtung 8 verbunden. Diese ist im dargestellten Ausführungsbeispiel durch eine Verlängerung der Stege 36 durch den äußeren O-Ring 34 gebildet, wobei sich die Stege 36 aus gleichem Material wie der Abstandhalter 50 unmittelbar streifenförmig in diesen fortsetzen können. Man kann aber beispielsweise auch eine Befestigung an einem Stützkorsett 25 anderer Ausbildungsart oder an einem sonstigen, zweckmäßig nicht nachgiebigen Teil der Fugendichtung 8 vorsehen, nur beispielsweise an einer etwa außen liegenden zusätzlichen Schalung 16.

Bei allen bisher detailliert beschriebenen Ausführungsbeispielen 1 bis 6 einschließlich der Sonderform der Fig. 11 ist insbesondere auch an den Fall gedacht, daß die dargestellten einschaligen Einzelrohre 2 besonders dünnwandig ausgebildet sind.

Bei hinreichender Wandstärke, insbesondere bei Einzelrohren 2 aus Schamotte oder Leichtbeton, kommen die nachfolgend beschriebenen Ausführungsbeispiele 7 bis 10 in Betracht.

In einfachster Ausführung kann die ganze Fugendichtung 8 auf den Mittelsteg 22 der Ausführungsform nach Fig. 1 reduziert sein, also auf einen nachgiebigen Flachring. Dieser erstreckt sich dann ebenso wie in Fig. 1 bis zu einem Bereich innerhalb der Fugen 6, wo die Fugendichtung 8 eine verlorene Außenschalung für die amorphe Masse 12 bildet.

In nicht dargestellter Weise kann dieselbe Flachdichtung, insbesondere wenn sie aus feuerfestem Material gefertigt ist, auch anschließend an die Innenfläche 42 der Einzelrohre angeordnet oder nach dem Vorbild des Ausführungsbeispiels der Fig. 3 sowohl innen als auch außen in der Fuge angeordnet sein, und zwar sowohl zweiteilig als auch mit verbindenden Stegen 36 wiederum nach dem Vorbild der Fig. 3.

Im Falle einer konventionellen Stufenfuge nach Art der Fig. 5 sind dann zweckmäßig beim dritten und auch fünfzehnten Ausführungsbeispiel die Stege 36 im Bereich des schräg konischen Übergangs zwischen den beiden Stufen der Stufenfuge ebenfalls schräg angeordnet.

Bei stumpfen Stirnflächen der aneinander anschließenden Einzelrohre kann es dabei jedoch leicht beispielsweise zu Fehlzentrierungen der vorgefertigten Fugendichtung 8 in bezug auf die Stirnflächen der Einzelrohre 2 kommen. Dies wird vermieden, wenn im Sinne des Dreieckprofils des sechsten Ausführungsbeispiels, aber im ganzen noch deutlicher, bei dem siebten bis zehnten Ausführungsbeispiel Zurücksetzungen in fugenbildenden Stirnflächen der Einzelrohre vorgesehen sind, in welche vorgeformte Verfugungskomponenten der Fugendichtung 8 formschlüssig eingreifen. Zugleich wird dabei auch die Abdichtungslänge in der Fuge vergrößert.

Bei dem siebten Ausführungsbeispiel ist der Querschnitt der Fugendichtung 8 rechteckig. Die vorgeformte Verfugungskomponente, welche zugleich die ganze Fugendichtung 8 bildet, ragt jedoch in stufenförmig ausgebildete Zurücksetzungen an der Außenkante der Einzelrohre hinein und bildet dabei eine Dichtungshülse, welche in Höhe des verbleibenden Teils der Fuge 6 die verlorene Schalung 14 für die amorphe Masse 12 bildet. Dabei ist noch ein Überstand 55 über die Außenfläche 28 vorgesehen bei gleichbleibendem Rechteckprofil der Fugendichtung 8. Abwandlungen dieses Rechteckprofiles etwa unter zusätzlicher Schaffung der früher erörterten Auswölbung 32 sind dabei möglich. Außerdem sind die die Fuge 6 bildenden Einzelrohre 2 bei dieser Ausführungsform achsinvariant ausgebildet, da gleichartige Zurücksetzungen 20 an beiden Enden der Einzelrohre vorgesehen werden.

Zusätzlich kann noch ein in den engen Bereich der Fuge 6 eingreifender Mittelsteg 22 nach Art des Mittelstegs 22 des ersten Ausführungsbeispiels an der Fugendichtung als nachgiebige vorgeformte Verfugungskomponente ausgebildet sein, so daß im ganzen wie beim ersten Ausführungsbeispiel ein T-Profil gebildet wird. Dabei bildet der Querbalken 24 der siebten Ausführungsform jedoch keine Dichtlippen mit der Außenfläche 28 der Einzelrohre 2, sondern nur innerhalb der Fuge zusätzliche Dichtflächen mit der ausgebildeten Stufenfläche der abgestuften Zurücksetzung 20.

Bevorzugt ist eine Ausführungsform, bei der der Mittelsteg 22 etwa dieselbe radiale Erstreckungslänge hat wie die Stufe der Zurücksetzung 20.

Die achte Ausführungsform variiert die siebte bzw. die achte Ausführungsform insofern, als an der Fuge nicht zwei komplementäre Zurücksetzungen 20 an den beiden gegenüberliegenden Stirnflächen der Einzelrohre ausgebildet sind, sondern nur an einer, hier der im Montagezustand jeweils unteren Stirnfläche.

Diese Variante der Fig. 8 ist hier in bezug auf eine Abwandlung der Fig. 7 dargestellt.

Die Ausführungsart der Fig. 7 kann gegebenenfalls sowohl an der Innenseite als auch an der Außenseite der Fuge vorgesehen sein. Ähnlich kann auch die Ausführungsform der Fig. 8 sowohl an der Innenseite als auch an der Außenseite der Fuge angeordnet sein.

Nur an einer der fugenbildenden Stirnflächen der Einzelrohre 2 vorgesehene Zurücksetzungen 20 sind bevorzugt sogar im Gegensatz zur Darstellung in Fig. 8 an der oberen Stirnfläche des im Montagezustand unteren fugenbildenden Einzelrohrs, also an der Unterseite der Fuge 6, vorgesehen. Dadurch kann man die Fugendichtung auf dem unteren Einzelrohr vormontieren und als nachgiebigeren Abstandhalter für das nächstaufzusetzende obere Einzelrohr verwenden.

Außerdem kann man allgemein bei gesondert vorgesehenen Bauelementen der Fugendichtung 8 diese über Stege nach Art der Stege 36 der Fig. 3 und 6 miteinander verbinden.

Das neunte Ausführungsbeispiel variiert die Idee der Fig. 7 dadurch, daß an Stelle einer Fugendichtung 8 mit rechteckigem Profil wiederum ein O-Ring 34 vorgesehen ist, welcher in eine in diesem Fall als umlaufende Ringnut 54 ausgebildete Zurücksetzung 20 an beiden gegenüberliegenden Enden der Einzelrohre 2, in nicht dargestellter Abwandlung im Sinne von Fig. 8, aber auch nur in eine Ringnut 54 an einer Stirnseite, eingreift.

Eine Verdoppelung der O-Ringe nach dem Vorbild der Fig. 3 mit und ohne verbindenden Steg 36 ist auch hier möglich.

Bei den Ausführungsformen der Fig. 7 bis 9 sind die Zurücksetzungen 20 Stufen mit rechteckigem, insbesondere quadratischem, lichten querschnitt, so daß die in sie formschlüssig eingreifenden vorgeformten Verfugungskomponenten der Fugendichtungen 8 entsprechend rechteckige Profile zeigen.

Bei dem gerundeten O-Ring nach Fig. 10 hat die Ringnut 54 komplementären kreissegmentförmigen Querschnitt.

Bei der Ausführungsform der Fig. 6 bilden die mit dem dreieckigen Profil zusammenwirkenden Abschrägungen 56 der Außenkanten der Einzelrohre 2 auch schon Zurücksetzungen 20 im oben geschilderten Sinne, die dort geradlinig schräg vorgesehen sind.

Ähnliche Anschrägungen kann man auch noch zur Herstellung einer teilweisen Dichtlippenwirkung der Querbalken 24 bei der zweiten Ausführungsform vorsehen und dabei gegebenenfalls das ovale Profil mit einem dichtlippenartig wirkenden Bereich nahe dem Mittelsteg 22 und einem zentrierenden ferneren Bereich in nicht dargestellter Modifikation der zweiten Ausführungsform ausbilden.

In ähnlicher Oberlegungsart kann man auch noch bei der zehnten Ausführungsform die an beiden Stirnseiten, in nicht dargestellter Weise gegebenenfalls auch nur an einer Stirnseite, vorgesehenen Zurücksetzungen 20 mit kreisbogenförmig profilierter Stufe ausbilden und mit einem O-Ring 34 in Eingriff bringen, der über den eigentlichen stumpf begrenzten Bereich der Fuge 6 erheblich, vorzugsweise um das Doppelte oder mehr, axial hervorsteht und außerdem radialen Überstand hat, vorzugsweise sogar mit mehr als der Hälfte außerhalb der Fuge 6 angeordnet ist. Zur Stabilisierung des relativ großen radialen Überstandes ist dabei nach dem Vorbild der Fig. 2 ein Stützkorsett 25 als Kern innerhalb des O-Ringes angeordnet. Bevorzugt ist dabei die dargestellte Versteifungsart mit einem Kern, der sternförmig aus sich axial und radial erstreckenden Stegen vorteilhaft gleicher Erstreckungsweite zusammengesetzt ist.

Man kann aber auch im Sinne von Fig. 2 einen zur kreisförmigen Umrißkontur des O-Rings 34 komplementär geformten zentralen Kern bilden, ebenso wie man einen sternförmigen Kern mit axialer sowie radialer Erstreckung auch bei der zweiten Ausführungsform vorsehen kann, wobei dann zweckmäßig die axiale Erstreckung länger gewählt wird als die radiale Erstreckung.

Bei der neunten Ausführungsform bildet schließlich der radiale Überstand der Fugendichtung nach zusätzlich Dichtlippen 26 in Zusammenwirken mit der Außenfläche 28 der Einzelrohre.

In schon früher angesprochener Weise sind diese Dichtlippen dabei von einer Auswölbung 32 gebildet, deren gerundete Gestalt in den äußeren Kanten der Dichtlippen 26 deren Querschnitt bis nahezu auf null reduziert.

Alternativ könnte auch eine weiter abgestufte Dichtlippenausbildung nach dem Vorbild der Fig. 1 mit Dichtlippen 26 rechteckigen Querschnitts vorgesehen sein.

Ebenso könnte die Ausführungsform nach Fig. 9 im Sinne der Fig. 8 nur auf eine Seite der Fugen in der dort dargestellten oder in der besprochenen nicht dargestellten Variante bezogen sein.

Schließlich ist auch eine Variante nach dem Vorbild der Fig. 7 denkbar, bei der der Mittelsteg 22 weggelassen ist, und zwar sowohl bei der dargestellten Modifikation als auch bei den besprochenen möglichen Varianten.

Im Rahmen der Erfindung werden insbesondere Wandstärken der Einzelrohre im Bereich von 5 bis 50 mm in Betracht gezogen.

Vorzugsweise ist dabei an den Bereich 10 bis 25 mm gedacht, insbesondere dann, wenn die Stirnfläche der Einzelrohre abgestuft ausgebildet ist bzw. Ausbildungsformen beschrieben sind, bei denen die Fugendichtung nicht innen oder außen über die Fuge übersteht.

Bei Überstand über die Fuge, insbesondere auch Überstand allein außen, werden insbesondere auch Wandstärken der Einzelrohre 2 von 5 bis 10 mm in Betracht gezogen, in Ausnahmefällen auch noch geringere Wandstärken, und das schließt nicht aus, einen Überstand über die Fuge auch bei größeren Wandstärken vorsehen zu können.

Die Nachgiebigkeit der vorgefertigten Verfugungskomponente ist zweckmäßig allgemein so ausgebildet, daß die Fugenhöhe unter dem Gewicht einer 1 m langen Rauchgasrohrsäule um 2 bis 25 %, vorzugsweise 5 bis 20 %, der Fugenhöhe im unbelasteten Zustand vermindert wird. Unter Fugenhöhe im unbelasteten Zustand wird dabei der Zustand angesprochen, bei dem ein Einzelrohr auf die schon in der späteren Fuge angeordnete vorgefertigte Fugendichtung aufgesetzt wird, diese aber im Bereich der Fuge noch nicht belastet ist. Es besteht dann bereits ein Eingriff zwischen den Einzelrohren und der zwischen ihnen angeordneten Fugendichtung, jedoch noch ohne Belastung derselben. Bei der Bemessung der Nachgiebigkeit wird von einem Zustand ausgegangen, bei dem in der Fuge noch keine amorphe Masse eingebracht ist. Durch entsprechende Formgebung der vorgefertigten Verfugungskomponente kann in vorteilhafter Weise erreicht werden, daß mit zunehmender Höhe der Rauchgassäule die Zusammendrückung der Fuge weniger als proportional ist, so daß z.B. bei Aufbau hoher Rauchgasrohre weniger noch nicht erhärtete amorphe Masse aus der Fuge herausquillt, die man nur in beschränkter axialer Reichweite abstreichen kann. Vorzugsweise werden Fugenhöhen im endgültigen Bauzustand mit erhärteter amorpher Masse zwischen 3 und 10 mm ausgebildet.

**Patentansprüche**

1. Fugenverbindung zwischen sich zu einem Rauchgasrohr eines mehrschaligen Schornsteins axial ergänzenden Einzelrohren (2) mit einer in den Fugen (6) angeordneten Verfugungsmasse, die innerhalb der Fuge mindestens in zwei radial aufeinander folgende Verfugungskomponenten mit unterschiedlichen Verfugungseigenschaften unterteilt ist, wobei mindestens eine Verfugungskomponente eine amorphe aushärtende Masse (12) ist,
   dadurch **gekennzeichnet,** daß mindestens eine nachgiebige Verfugungskomponente von einer vorgefertigten Fugendichtung (8) gebildet ist, die mindestens an einer Seite radial über die Fuge (6) vorsteht und innerhalb der Fuge eine verlorene Schalung (14) für mindestens eine amorphe Verfugungskomponente (12) der Fugenverbindung bildet, wobei die Verfugungskomponenten in einem radial innen liegenden Bereich der Fuge auf Temperaturfestigkeit und in einem radial außen liegenden Bereich der Fuge auf Feuchtigkeitsdichtheit bei niederen Temperaturen ausgelegt sind.

2. Fugenverbindung nach Anspruch 1, dadurch gekennzeichnet, daß die von ihr gebildete Verfugungskomponente zugleich die verlorene Schalung (14) bildet.

3. Fugenverbindung nach Anspruch 1 oder 2, dadurch gekennzeichnet, daß die von ihr gebildete Verfugungskomponente nur an einer radialen Seite der Fuge (6), vorzugsweise der radial äußeren Seite, vorgesehen ist.

4. Fugenverbindung nach Anspruch 1 oder 2, dadurch gekennzeichnet, daß die von ihr gebildete(n) Verfugungskomponente(n) an den radial inneren und äußeren Seiten der Fuge (6) vorgesehen ist (sind).

5. Fugenverbindung nach Anspruch 3, dadurch gekennzeichnet, daß für die andere radiale Seite der Fuge (6) eine zusätzliche verlorene Schalung (16) vorgesehen ist.

6. Fugenverbindung nach einem der Ansprüche 1 bis 5, dadurch gekennzeichnet, daß die von ihr gebildete(n) Verfugungskomponente(n) und die verlorene(n) Schalung(en) (14, 16) zu einem vorgefertigten Bauteil zusammengefaßt sind.

7. Fugenverbindung nach einem der Ansprüche 1 bis 6, dadurch gekennzeichnet, daß sie als Abstandhalter für die Fugenhöhe ausgebildet ist.

8. Fugenverbindung nach Anspruch 7, dadurch gekennzeichnet, daß von ihr gebildete Verfugungskomponente(n) als nachgiebiger Abstandhalter vorgesehen ist (sind).

9. Fugenverbindung nach einem der Ansprüche 1 bis 8, dadurch gekennzeichnet, daß von ihr gebildete Verfugungskomponente(n) elastisch-nachgiebig ist (sind).

10. Fugenverbindung nach einem der Ansprüche 1 bis 9, dadurch gekennzeichnet, daß von ihr gebildete Verfugungskomponente(n) plastisch-nachgiebig ist (sind).

11. Fugenverbindung nach einem der Ansprüche 1 bis 10, dadurch gekennzeichnet, daß der querschnitt der von der Fugendichtung (8) gebildeten Verfugungskomponente kreisflächenartig geformt ist.

12. Fugenverbindung nach einem der Ansprüche 1 bis 11, dadurch gekennzeichnet, daß der radial überstehende Teil der von der Fugendichtung (8) gebildeten Verfugungskomponente 40 bis 80 %, vorzugsweise über 50 %, von deren radialer Breite ausmacht.

13. Fugenverbindung nach Anspruch 11 oder 12, dadurch gekennzeichnet, daß der radial überstehende Teil der von der Fugendichtung (8) gebildeten Verfugungskomponente 60 bis 80 % von deren radialer Breite ausmacht.

14. Fugenverbindung nach einem der Ansprüche 1 bis 13, dadurch gekennzeichnet, daß die radiale Weite der Fuge (6), welche von einer nur an einer Seite der Fuge angeordneten, von der Fugendichtung gebildeten Verfugungskomponente eingenommen wird, 10 bis 50 % der radialen Fugenbreite ausmacht.

15. Fugenverbindung nach einem der Ansprüche 1 bis 13, dadurch gekennzeichnet, daß die radiale Weite der Fuge (6), welche von an beiden Seiten der Fuge angeordneter (oder angeordneten) Verfugungskomponente(n) eingenommen wird, 10 % bis 1/3 der radialen Fugenbreite ausmacht.

16. Fugenverbindung nach einem der Ansprüche 1 bis 15, dadurch gekennzeichnet, daß der radial überstehende Teil der von der Fugendichtung (8) gebildeten Verfugungskomponente mindestens in einer axialen Richtung, vorzugsweise in beiden, mit einem axialen Überstand gegenüber dem innerhalb der Fuge (6) angeordneten Bereich ausgebildet ist.

17. Fugenverbindung nach Anspruch 16, dadurch gekennzeichnet, daß der Überstand eine am Umfang des jeweiligen Einzelrohres im Einbauzustand zur Anlage kommende Lippendichtung (26) bildet.

18. Fugenverbindung nach Anspruch 16 oder 17, dadurch gekennzeichnet, daß der Überstand eine axial ausgerichtete oder sich vorzugsweise trichterartig erweiternde Zentrierung für das jeweilige Einzelrohr (2) bildet.

19. Fugenverbindung nach einem der Ansprüche 1 bis 18, dadurch gekennzeichnet, daß von der Fugendichtung gebildete Verfugungskomponente(n) von einem Stützkorsett (25) gehalten ist (sind).

20. Fugenverbindung nach Anspruch 19, dadurch gekennzeichnet, daß das Stützkorsett (25) einen in der jeweiligen Verfugungskomponente eingebetteten Tragkörper aufweist.

21. Fugenverbindung nach Anspruch 19 oder 20, dadurch gekennzeichnet, daß das Stützkorsett (25) eine die jeweilige Verfugungskomponente durchziehende Stützstruktur aufweist.

22. Fugenverbindung nach Anspruch 21, dadurch gekennzeichnet, daß die Stützstruktur eine beigemente Fasermatrix aufweist.

23. Fugenverbindung nach einem der Ansprüche 19 bis 22, dadurch gekennzeichnet, daß das Stützkorsett (25) eine die jeweilige Verfugungskomponente umschließende, vorzugsweise luftdurchlässige, Hülle ist.

24. Fugenverbindung nach Anspruch 23, dadurch gekennzeichnet, daß die Hülle für in ihr angeordnete nachgiebig plastische Dichtmasse durchlässig bzw. für in ihr angeordnete elastisch-nachgiebige Dichtmasse bei Kompression durchdringbar ausgebildet ist.

25. Fugenverbindung nach einem der Ansprüche 19 bis 24, dadurch gekennzeichnet, daß das Stützkorsett (25) eine den radial überstehenden Teil der von der Fugendichtung (8) gebildeten Verfugungskomponente formschlüssig umschließende Umfangsummantelung (38,40) aufweist.

26. Fugenverbindung nach Anspruch 25, dadurch gekennzeichnet, daß die Umfangsummantelung (38,40) von einem die Verfugungskomponente (34) rillenförmig (38) umschließend geformten Flachmaterial gebildet ist.

27. Fugenverbindung nach Anspruch 25 oder 26, dadurch gekennzeichnet, daß die Umfangsummantelung (38,40) mindestens in einer axialen Richtung, vorzugsweise in beiden, einen axialen Überstand (40) über die von ihr gestützte Verfugungskomponente (34) aufweist.

28. Fugenverbindung nach Anspruch 27, dadurch gekennzeichnet, daß der jeweilige axiale Überstand (40) der Umfangsummantelung (38,40) 20 bis 50 mm beträgt.

29. Fugenverbindung nach Anspruch 27 oder 28, dadurch gekennzeichnet, daß der im Einbauzustand der Rohre axiale Überstand (40) der Umfangsummantelung (38,40) als Zentrierungstrichter (48) ausgebildet ist.

30. Fugenverbindung nach einem der Ansprüche 27 bis 29, dadurch gekennzeichnet, daß der axiale Überstand (40) gegenüber der Außenfläche des jeweiligen Einzelrohres (2) einen radialen Abstand von 1 bis 3 % des Außendurchmessers des Nennmaßes des Einzelrohres (2) hat und sich gegebenenfalls im Zentrierungstrichter (48) auf maximal 10 % erweitert.

31. Fugenverbindung nach einem der Ansprüche 19 bis 30, dadurch gekennzeichnet, daß das Stützkorsett (25) eine zusätzliche verlorene Schalung (16) für die entgegengesetzte Seite der Fuge (6) trägt.

32. Fugenverbindung nach einem der Ansprüche 5 bis 31, dadurch gekennzeichnet, daß die zusätzliche verlorene Schalung (16) von einer etwa fugenhohen und etwa die Innenfläche der benachbarten Einzelrohre fortsetzenden dünnwandigen Hülse gebildet ist.

33. Fugenverbindung nach einem der Ansprüche 5 bis 32, dadurch gekennzeichnet, daß die zusätzliche verlorene Schalung (16) mit einer Auflagerung (46) auf der oberen Stirnseite des unteren fugenbildenden Einzelrohres (2) versehen ist.

34. Fugenverbindung nach einem der Ansprüche 1 bis 33, dadurch gekennzeichnet, daß die zusätzliche verlorene Schalung (16) von über den Umfang verteilten Tragstegen (44) mit dem Stützkorsett (25) verbunden ist.

35. Fugenverbindung nach einem der Ansprüche 1 bis 34, dadurch gekennzeichnet, daß die von der Fugendichtung (8) gebildete Verfugungskomponente einen T-förmigen Querschnitt hat, vorzugsweise insgesamt T-förmig geformt ist.

36. Fugenverbindung nach einem der Ansprüche 1 bis 34, dadurch gekennzeichnet, daß die von der Fugendichtung (8) gebildete Verfugungskomponente eine in die Fuge ragende Flachdichtung mit einem nach oben und unten langgestreckt gerundeten axialen und radialen Überstand bildet, vorzugsweise insgesamt entsprechend geformt ist.

37. Fugenverbindung nach Anspruch 36, dadurch gekennzeichnet, daß der axiale und radiale Überstand mit einem ähnlich geformten Kern als Stützkorsett (25) ausgebildet ist.

38. Fugenverbindung nach einem der Ansprüche 1 bis 34, dadurch gekennzeichnet, daß die von der Fugendichtung (8) gebildete(n) Verfugungskomponente(n) zwei an der Außen- und Innenseite der Fuge (6) anordbare Ringdichtungen - vorzugsweise mit kreisartigem Querschnitt (34) - bilden, welche durch über den Umfang verteilte Stege (36) miteinander verbunden oder mehrteilig vorgesehen sind.

39. Fugenverbindung nach einem der Ansprüche 1 bis 38, gekennzeichnet durch Ausbildung mit einem radialen Abstandhalter (50) zwischen dem Rauchgasrohr (2) und einer mit radialem Abstand folgenden äußeren Schale, vorzugsweise der Ummantelung (10) eines zweischaligen Schornsteins.

40. Fugenverbindung nach einem der Ansprüche 1 bis 39, dadurch gekennzeichnet, daß eine von der Fugendichtung (8) gebildete Verfugungskomponente von einer Dichtschnur aus mineralischen oder keramischen Fasern gebildet ist.

41. Fugenverbindung nach einem der Ansprüche 1 bis 40, dadurch gekennzeichnet, daß eine von der Fugendichtung (8) gebildete Verfugungskomponente von einem gummielastischen Strang auf Naturkautschuk- oder Kunststoffbasis gebildet ist.

42. Fugenverbindung nach einem der Ansprüche 1 bis 41, dadurch gekennzeichnet, daß eine von der Fugendichtung (8) gebildete Verfugungskomponente von einem plastisch-nachgiebigen Strang auf Naturkautschuk- oder Kunststoffbasis, vorzugsweise auf Basis eines Copolymers von Isobutylen mit einem kleinen prozentualen Anteil an Dien, vorzugsweise Butadien, gebildet ist.

43. Fugenverbindung nach Anspruch 42, dadurch gekennzeichnet, daß der Strang mit mineralischen, vorzugsweise silikathaltigen, Füllstoffen versehen ist.

44. Fugenverbindung nach einem der Ansprüche 1 bis 43, dadurch gekennzeichnet, daß eine von der Fugendichtung (8) gebildete Verfugungskomponente mit einem Zusatz versehen ist oder aus einem Material besteht, das sich bei Hinzufügung eines Aktivators mit dem Material der Einzelrohre chemisch verbindet.

45. Fugenverbindung nach Anspruch 44, dadurch gekennzeichnet, daß der Zusatz oder das Material ein säurefester Kitt und der Aktivator Wasser oder Wasserglas sind.

46. Fugenverbindung nach Anspruch 44 oder 45, dadurch gekennzeichnet, daß das Material als Pulver oder Granulat von einer durchlässigen Hülle - vorzugsweise ein Gewebe, Gewirke oder Gestricke - gehalten ist.

47. Fugenverbindung nach einem der Ansprüche 19 bis 46, dadurch gekennzeichnet, daß das Stützkorsett (25) aus Metall, vorzugsweise nichtrostendem Stahl oder Aluminium, Kunststoff, vorzugsweise Polytetrafluoräthylen, oder Carbon-, Keramik- oder Mineralfasermaterial besteht.

48. Fugenverbindung nach einem der Ansprüche 1 bis 47, dadurch gekennzeichnet, daß die Einzelrohre (2) einschalig und/oder dünnwandig sind, insbesondere aus Schamotte, Keramik, Glas oder Leichtbeton bestehen.

49. Fugenverbindung nach Anspruch 48, dadurch gekennzeichnet, daß die fugenbildenden Stirnflächen der Einzelrohre (2) stumpf ausgebildet sind.

**50.** Fugenverbindung nach Anspruch 48 oder 49, dadurch gekennzeichnet, daß die Stirnflächen der Einzelrohre (2) an der Seite, wo sie mit einer an der Fugendichtung (8) ausgebildeten Verfugungskomponente zusammenwirken, abgekantet, vorzugsweise abgeschrägt, ausgebildet sind.

**51.** Fugenverbindung nach einem der Ansprüche 1 bis 50, gekennzeichnet durch einen radial innen in der Fuge (6) angeordneten säurefesten Fugenmörtel als amorphe Verfugungsmasse.

**52.** Anwendung einer Fugenverbindung nach einem der Ansprüche 1 bis 51 für das Sanieren von Schornsteinen durch Neueinziehen von Rauchgasrohren.

**53.** Anwendung einer Fugenverbindung nach einem der Ansprüche 1 bis 51 oder Anwendung nach Anspruch 52 beim Einführen eines Einzelrohres (2) in bereits höher ausgeführte Ummantelung (10) des Rauchgasrohres.

**54.** Anwendung nach Anspruch 52 oder 53 mit der Maßgabe, daß die Einzelrohre (2) jeweils eine Länge von mehr als 75 cm, vorzugsweise etwa 1 m, haben.

**55.** Anwendung einer Fugenverbindung nach einem der Ansprüche 1 bis 51 oder Anwendung nach einem der Ansprüche 52 bis 54 auf die Herstellung eines zweischaligen Schornsteins aus mindestens einem Rauchgasrohr und einer mit Abstand zu diesem angeordneten Ummantelung (10) mit einem Wärmedurchlaßwiderstand des Schornsteins kleiner als 0,65 m²K/W.

**56.** Anwendung einer Fugenverbindung nach einem der Ansprüche 1 bis 51 oder Anwendung nach einem der Ansprüche 52 bis 54 auf die Herstellung eines mindestens dreischaligen Schornsteins, bei dem zwischen mindestens einem Rauchgasrohr und einer Stützummantelung eine Wärmedämmschicht, insbesondere aus Mineralwolle, mit etwas Radialspiel, insbesondere mit radialem Abstand zum Rauchgsrohr, angeordnet ist.

**57.** Anwendung nach Anspruch 56 mit der Maßgabe, daß der Schornstein hinterlüftet ausgebildet ist.

**Claims**

**1.** Joint connection between individual tubes (2), joining together axially to form a flue-gas tube of a multi-shell chimney, having a jointing compound which is arranged in the joint (6) and within the joint is subdivided at least into two radially successive jointing components having different jointing characteristics, at least one jointing component being an amorphous curing compound (12), characterised in that at least one yielding jointing component is formed by a prefabricated joint seal (8), which projects at least on one side radially beyond the joint (6) and within the joint forms a permanent shuttering (14) for at least one amorphous jointing component (12) of the joint connection, the jointing components being designed for temperature resistance in a radially inner-lying region of the joint and for dampproofness at lower temperatures in a radially outerlying region of the joint.

**2.** Joint connection according to Claim 1, characterised in that the jointing component formed by it at the same time forms the permanent shuttering (14).

**3.** Joint connection according to Claim 1 or 2, characterised in that the jointing component formed by it is provided only on one radial side of the joint (6), preferably the radially outer side.

**4.** Joint connection according to Claim 1 or 2, characterised in that the jointing component(s) formed by it is(are) provided on the radially inner and outer sides of the joint (6).

**5.** Joint connection according to Claim 3, characterised in that an additional permanent shuttering (16) is provided for the other radial side of the joint (6).

**6.** Joint connection according to one of Claims 1 to 5, characterised in that the jointing component(s) and the permanent shuttering(s) (14, 16) formed by it are combined into a prefabricated compound unit.

**7.** Joint connection according to one of Claims 1 to 6, characterised in that it is designed as a spacer for the joint height.

**8.** Joint connection according to Claim 7, characterised in that jointing component(s) formed by it is (are) provided as yielding spacers.

**9.** Joint connection according to one of Claims 1 to 8, characterised in that jointing component(s) formed by it is (are) elastically yielding.

**10.** Joint connection according to one of Claims 1 to 9, characterised in that jointing component(s) formed by it is (are) plastically yielding.

11. Joint connection according to one of Claims 1 to 10, characterised in that the cross-section of the jointing component formed by the joint seal (8) is shaped in the manner of a circular surface.

12. Joint connection according to one of Claims 1 to 11, characterised in that the radially protruding part of the jointing component formed by the joint seal (8) accounts for 40 to 80 %, preferably over 50 %, of its radial width.

13. Joint connection according to Claim 11 or 12, characterised in that the radially protruding part of the jointing component formed by the joint seal (8) accounts for 60 to 80 % of its radial width.

14. Joint connection according to one of Claims 1 to 13, characterised in that the radial width of the joint (6) which is taken up by a jointing component arranged only on one side of the joint and formed by the joint seal amounts to 10 to 50 % of the radial joint width.

15. Joint connection according to one of Claims 1 to 13, characterised in that the radial width of the joint (6) which is taken up by jointing component(s) arranged on both sides of the joint accounts for 10 % to 1/3 of the radial joint width.

16. Joint connection according to one of Claims 1 to 15, characterised in that the radially protruding part of the jointing component formed by the joint seal (8) is formed at least in one axial direction, preferably in both, with an axial protrusion with respect to the region arranged within the joint (6).

17. Joint connection according to Claim 16, characterised in that the protrusion forms a lip seal (26), coming into contact with the circumference of the respective individual tube in the installed state.

18. Joint connection according to Claim 16 or 17, characterised in that the protrusion forms an axially aligned or preferably funnel-like extending centring for the respective individual tube (2).

19. Joint connection according to one of Claims 1 to 18, characterised in that jointing component(s) formed by the joint seal is (are) held by a supporting corset (25).

20. Joint connection according to Claim 19, characterised in that the supporting corset (25) has a bearing body embedded in the respective jointing component.

21. Joint connection according to Claim 19 or 20, characterised in that the supporting corset (25) has a supporting structure throughout the respective jointing component.

22. Joint connection according to Claim 21, characterised in that the supporting structure has an affixed fibre matrix.

23. Joint connection according to one of Claims 19 to 22, characterised in that the supporting corset (25) is a, preferably air-permeable, sheath surrounding the respective jointing component.

24. Joint connection according to Claim 23, characterised in that the sheath is permeable for yieldingly plastic sealing compound arranged in it and penetrable under compression for elastically yielding sealing compound arranged in it.

25. Joint connection according to one of Claims 19 to 24, characterised in that the supporting corset (25) has a circumferential casing (38, 40) enclosing with a form fit the radially protruding part of the jointing component formed by the joint seal (8).

26. Joint connection according to Claim 25, characterised in that the circumferential casing (38, 40) is formed by a flat material shaped to enclose the jointing component (34) in rib form (38).

27. Joint connection according to Claim 25 or 26, characterised in that the circumferential casing (38, 40) has at least in one axial direction, preferably in both, an axial protrusion (40) beyond the jointing component (34) supported by it.

28. Joint connection according to Claim 27, characterised in that the respective axial protrusion (40) of the circumferential casing (38, 40) is 20 to 50 mm.

29. Joint connection according to Claim 27 or 28, characterised in that the axial protrusion (40) of the circumferential casing (38, 40) in the installed state of the tubes is designed as a centring funnel (48).

30. Joint connection according to one of Claims 27 to 29, characterised in that the axial protrusion (40) has a radial distance from the outer face of the respective individual tube (2) of 1 to 3 % of the outside diameter of the nominal size of the individual tube (2) and widens, if appropriate, in the centring funnel (48) to a maximum of 10 %.

31. Joint connection according to one of Claims 19 to 30, characterised in that the supporting corset (25) bears an additional permanent shuttering (16) for the opposite side of the joint (6).

32. Joint connection according to one of Claims 5 to 31, characterised in that the additional permanent shuttering (16) is formed by a thin-walled sleeve of approximately joint height and approximately continuing the inner face of the neighbouring individual tubes.

33. Joint connection according to one of Claims 5 to 32, characterised in that the additional permanent shuttering (16) is provided with a mounting (46) on the upper end face of the lower joint-forming individual tube (2).

34. Joint connection according to one of Claims 1 to 33, characterised in that the additional permanent shuttering (16) is connected to the supporting corset (25) by bearing webs (44) distributed over the circumference.

35. Joint connection according to one of Claims 1 to 34, characterised in that the jointing component formed by the joint seal (8) has a T-shaped cross-section, preferably is shaped overall in the form of a T.

36. Joint connection according to one of Claims 1 to 34, characterised in that the jointing component formed by the joint seal (8) forms a flat gasket projecting into the joint, having an upwardly and downwardly elongatedly rounded axial and radial protrusion, preferably is correspondingly shaped overall.

37. Joint connection according to Claim 36, characterised in that the axial and radial protrusion is designed with a similarly shaped core as supporting corset (25).

38. Joint connection according to one of Claims 1 to 34, characterised in that the jointing component(s) formed by the joint seal (8) form two ring seals - preferably of circular cross-section (34) - which can be arranged on the outer and inner side of the joint (6) and are connected to each other by webs (36) distributed over the circumference or are provided in a multipart manner.

39. Joint connection according to one of Claims 1 to 38, characterised by designing with a radial spacer (50) between the flue-gas tube (2) and an outer leaf following at a radial distance, preferably the casing (10) of a two-shell chimney.

40. Joint connection according to one of Claims 1 to 39, characterised in that a jointing component formed by the joint seal (8) is formed by a gasket cord of mineral or ceramic fibres.

41. Joint connection according to one of Claims 1 to 40, characterised in that a jointing component formed by the joint seal (8) is formed by an elastomeric strand based on natural rubber or plastic.

42. Joint connection according to one of Claims 1 to 41, characterised in that a jointing component formed by the joint seal (8) is formed by a plastically yielding strand based on natural rubber or plastic, preferably based on a copolymer of isobutylene with a small percentage of diene, preferably butadiene.

43. Joint connection according to Claim 42, characterised in that the strand is provided with mineral, preferably silicate-containing, fillers.

44. Joint connection according to one of Claims 1 to 43, characterised in that a jointing component formed by the joint seal (8) is provided with an additive or consists of a material which chemically bonds to the material of the individual tubes on addition of an activator.

45. Joint connection according to Claim 44, characterised in that the additive or the material is an acid-resistant cement and the activator is water or waterglass.

46. Joint connection according to Claim 44 or 45, characterised in that the material as powder or granules is held by a permeable sheath, preferably a woven or knitted fabric.

47. Joint connection according to one of Claims 19 to 46, characterised in that the supporting corset (25) consists of metal, preferably stainless steel or aluminium, plastic, preferably polytetrafluoroethylene, or carbon-fibre, ceramic-fibre or mineral-fibre material.

48. Joint connection according to one of Claims 1 to 47, characterised in that the individual tubes (2) are one-shell and/or thin-walled, in particular consist of chamotte, ceramic, glass or lightweight concrete.

49. Joint connection according to Claim 48, characterised in that the joint-forming end faces of the individual tubes (2) are butt-ended in design.

50. Joint connection according to Claim 48 or 49, characterised in that the end faces of the individual tubes (2) are angled-off, preferably bevelled-off, in design on the side where they interact with a jointing component formed on the joint seal (8).

**51.** Joint connection according to one of Claims 1 to 50, characterised by an acid-resistant joint mortar as amorphous jointing compound, arranged radially inwards in the joint (6).

**52.** Application of a joint connection according to one of Claims 1 to 51, for the renewal of chimneys by newly drawing in flue-gas tubes.

**53.** Application of a joint connection according to one of Claims 1 to 51 or application according to Claim 52 when introducing an individual tube (2) into casing (10) of the flue-gas tube already provided higher up.

**54.** Application according to Claim 52 or 53 with the proviso that the individual tubes (2) in each case have a length of more than 75 cm, preferably about 1 m.

**55.** Application of a joint connection according to one of Claims 1 to 51 or application according to one of Claims 52 to 54, to the production of a two-shell chimney from at least one flue-gas tube and a casing (10) arranged at a distance from the latter, with a thermal resistance of the chimney of less than 0.65 m²K/W.

**56.** Application of a joint connection according to one of Claims 1 to 51 or application according to one of Claims 52 to 54 to the production of an at least three-shell chimney, in which a heat-insulating layer, in particular of mineral wool, is arranged between at least one flue-gas tube and a supporting casing with some radial play, in particular with radial distance from the flue-gas tube.

**57.** Application according to Claim 56 with the proviso that the chimney is of a ventilated design.

## Revendications

**1.** Joint de liaison entre des tubes individuels (2) se complétant axialement pour former un conduit de gaz de fumée d'une cheminée à parois multiples, comprenant une masse de jointoiement disposée dans les joints (6), qui à l'intérieur du joint, est subdivisée en au moins deux composants de jointoiement se succédant radialement et présentant des propriétés de jointoiement différentes, l'un au moins des composants de jointoiement étant une masse (12) amorphe, durcissable, caractérisé en ce qu'au moins un composant de jointoiement déformable est constitué par un joint d'étanchéité (8) préfabriqué, qui fait saillie radialement du joint (6) sur au moins un côté et qui forme, à l'intérieur du joint, un coffrage perdu (14) pour au moins un composant de jointoiement amorphe (12) du joint de liaison, les composants de jointoiement étant conçus, de manière à résister à la température dans une zone du joint située radialement à l'intérieur, et de façon à être étanche à l'humidité à faible température, dans une zone du joint située radialement à l'extérieur.

**2.** Joint de liaison selon la revendication 1, caractérisé en ce que le composant de jointoiement qu'il forme, constitue simultanément le coffrage perdu (14).

**3.** Joint de liaison selon la revendication 1 ou 2, caractérisé en ce que le composant de jointoiement qu'il forme, n'est prévu que sur un seul côté radial du joint (6), de préférence le côté radial extérieur.

**4.** Joint de liaison selon la revendication 1 ou 2, caractérisé en ce que le ou les composant(s) de jointoiement qu'il forme, est ou sont prévu(s) sur les côtés radialement intérieur et extérieur du joint (6).

**5.** Joint de liaison selon la revendication 3, caractérisé en ce que pour l'autre côté radial du joint (6), est prévu un coffrage perdu (16) supplémentaire.

**6.** Joint de liaison selon l'une des revendications 1 à 5, caractérisé en ce que le ou les composant(s) de jointoiement qu'il forme et le ou les coffrage(s) perdu(s) (14, 16) sont regroupés en une pièce préfabriquée.

**7.** Joint de liaison selon l'une des revendications 1 à 6, caractérisé en ce qu'il est réalisé en tant qu'entretoise d'espacement pour la hauteur du joint.

**8.** Joint de liaison selon la revendication 7, caractérisé en ce qu'un ou des composant(s) de jointoiement qu'il forme est ou sont réalisé(s) en tant qu'entretoise d'espacement déformable.

**9.** Joint de liaison selon l'une des revendications 1 à 8, caractérisé en ce qu'un ou des composant(s) de jointoiement qu'il forme, est ou sont déformable(s) de manière élastique.

**10.** Joint de liaison selon l'une des revendications 1 à 9, caractérisé en ce qu'un ou des composant(s) de jointoiement qu'il forme, est ou sont déformable(s) de manière plastique.

**11.** Joint de liaison selon l'une des revendications 1 à 10, caractérisé en ce que la section droite du composant de jointoiement formé par le joint d'étanchéité (8) présente une forme de surface circulaire.

**12.** Joint de liaison selon l'une des revendications 1 à 11, caractérisé en ce que la partie en saillie radiale du composant de jointoiement formé par le joint d'étanchéité (8), vaut de 40 à 80 %, de préférence plus de 50 %, de sa largeur radiale.

**13.** Joint de liaison selon la revendication 11 ou 12, caractérisé en ce que la partie en saillie radiale du composant de jointoiement formé par le joint d'étanchéité (8), vaut de 60 à 80 % de sa largeur radiale.

**14.** Joint de liaison selon l'une des revendications 1 à 13, caractérisé en ce que la largeur radiale du joint (6), occupée par un composant de jointoiement formé par le joint de liaison et disposé sur un seul côté du joint, vaut 10 à 50 % de la largeur de joint radiale.

**15.** Joint de liaison selon l'une des revendications 1 à 13, caractérisé en ce que la largeur radiale du joint (6), occupée par un ou des composant(s) de jointoiement disposé(s) des deux côtés du joint, vaut 10 % à 1/3 de la largeur de joint radiale.

**16.** Joint de liaison selon l'une des revendications 1 à 15, caractérisé en ce que la partie en saillie radiale du composant de jointoiement formé par le joint d'étanchéité (8), est réalisée de manière à présenter dans au moins une direction axiale, et de préférence dans les deux, une saillie axiale par rapport à la zone disposée à l'intérieur du joint (6).

**17.** Joint de liaison selon la revendication 16, caractérisé en ce que la saillie forme un joint d'étanchéité à lèvre (26) venant s'appliquer contre la périphérie de chacun des tubes individuels, à l'état monté.

**18.** Joint de liaison selon la revendication 16 ou 17, caractérisé en ce que la saillie forme un centrage d'orientation radiale ou s'évasant de préférence en forme d'entonnoir, pour chaque tube individuel (2).

**19.** Joint de liaison selon l'une des revendications 1 à 18, caractérisé en ce qu'un ou des composant(s) de jointoiement formé(s) par le joint de liaison, est ou sont maintenu(s) par une gaine de soutien (25).

**20.** Joint de liaison selon la revendication 19, caractérisé en ce que la gaine de soutien (25) présente un corps de support encastré dans le composant de jointoiement considéré.

**21.** Joint de liaison selon la revendication 19 ou 20, caractérisé en ce que la gaine de soutien (25) présente une structure de soutien traversant le composant de jointoiement considéré.

**22.** Joint de liaison selon la revendication 21, caractérisé en ce que la structure de soutien comprend une matrice de fibres, additionnée.

**23.** Joint de liaison selon l'une des revendications 19 à 22, caractérisé en ce que la gaine de soutien (25) est constituée par une enveloppe, de préférence perméable à l'air, entourant le composant de jointoiement considéré.

**24.** Joint de liaison selon la revendication 23, caractérisé en ce que l'enveloppe est perméable pour une masse d'étanchéité plastique, déformable, qu'elle renferme, ou peut être traversée, lors d'une compression, par une masse d'étanchéité déformable de manière élastique, qu'elle renferme.

**25.** Joint de liaison selon l'une des revendications 19 à 24, caractérisé en ce que la gaine de soutien (25) comprend une enveloppe périphérique (38, 40) entourant par complémentarité de forme, la partie en saillie radiale du composant de jointoiement formé par le joint d'étanchéité (8).

**26.** Joint de liaison selon la revendication 25, caractérisé en ce que l'enveloppe périphérique (38, 40) est constituée par un matériau plat ayant une forme entourant le composant de jointoiement (34) à la manière d'une goulotte.

**27.** Joint de liaison selon la revendication 25 ou 26, caractérisé en ce que l'enveloppe périphérique (38, 40) présente dans au moins une direction axiale, et de préférence dans les deux, une saillie axiale (40) au-delà du composant de jointoiement (34) qu'elle soutient.

**28.** Joint de liaison selon la revendication 27, caractérisé en ce que la saillie axiale (40) considérée de l'enveloppe périphérique (38, 40) à une valeur comprise entre 20 et 50 mm.

**29.** Joint de liaison selon la revendication 27 ou 28, caractérisé en ce que la saillie axiale (40) de l'enveloppe périphérique (38, 40), à l'état monté des tubes, est réalisée en tant qu'entonnoir de centrage (48).

**30.** Joint de liaison selon l'une des revendications 27 à 29, caractérisé en ce que la saillie axiale (40) présente, par rapport à la surface extérieure du tube individuel (2) considéré, un espacement radial de 1 à 3 % du diamètre extérieur de la dimension nominale du tube individuel (2), et, le cas échéant, s'évase au maximum à 10 % au niveau de l'entonnoir de centrage.

31. Joint de liaison selon l'une des revendications 19 à 30, caractérisé en ce que la gaine de soutien (25) porte un coffrage perdu supplémentaire (16) pour le côté opposé du joint (6).

32. Joint de liaison selon l'une des revendications 5 à 31, caractérisé en ce que le coffrage perdu supplémentaire (16) est constitué par une douille à paroi mince d'une longueur environ égale à la hauteur du joint et prolongeant sensiblement la surface intérieure des tubes individuels voisins.

33. Joint de liaison selon l'une des revendications 5 à 32, caractérisé en ce que le coffrage perdu supplémentaire (16) est pourvu d'un support d'appui (46) sur le côté frontal supérieur du tube individuel (2) inférieur formant le joint.

34. Joint de liaison selon l'une des revendications 1 à 33, caractérisé en ce que le coffrage perdu supplémentaire (16) est relié à la gaine de soutien (25) au moyen de nervures de support (44) réparties sur la périphérie.

35. Joint de liaison selon l'une des revendications 1 à 34, caractérisé en ce que le composant de jointoiement formé par le joint d'étanchéité (8), présente une section droite en forme de "T", et est de préférence globalement façonné en forme de "T".

36. Joint de liaison selon l'une des revendications 1 à 34, caractérisé en ce que le composant de jointoiement formé par le joint d'étanchéité (8) constitue un joint d'étanchéité plat qui s'engage dans le joint et qui comporte une saillie allongée et arrondie, d'étendue axiale et radiale, et est de préférence globalement façonné de manière correspondante.

37. Joint de liaison selon la revendication 36, caractérisé en ce que la saillie axiale et radiale est réalisée, à l'aide d'une âme de forme similaire, en tant que gaine de soutien (25).

38. Joint de liaison selon l'une des revendications 1 à 34, caractérisé en ce que le ou les composant(s) de jointoiement formé(s) par le joint d'étanchéité (8), forme(nt) deux joints d'étanchéité annulaires, de préférence de section droite circulaire (34), qui sont susceptibles d'être disposés sur le côté intérieur et le côté extérieur du joint (6), et qui sont reliés entre-eux par des nervures (36) réparties sur la périphérie, ou sont prévus en plusieurs parties.

39. Joint de liaison selon l'une des revendications 1 à 38, caractérisé par une configuration comportant une entretoise d'espacement radial (50) entre le conduit de gaz de fumée (2) et une paroi suivante à distance radiale, de préférence l'enveloppe (10) d'une cheminée à double paroi.

40. Joint de liaison selon l'une des revendications 1 à 39, caractérisé en ce qu'un composant de jointoiement formé par le joint d'étanchéité (8) est constitué par un cordon d'étanchéité en fibres minérales ou céramiques.

41. Joint de liaison selon l'une des revendications 1 à 40, caractérisé en ce qu'un composant de jointoiement formé par le joint d'étanchéité (8) est constitué par une bande élastique à base de caoutchouc naturel ou à base de caoutchouc synthétique.

42. Joint de liaison selon l'une des revendications 1 à 41, caractérisé en ce qu'un composant de jointoiement formé par le joint d'étanchéité (8) est constitué par une bande déformable de manière plastique à base de caoutchouc naturel ou à base de matière plastique, de préférence à base d'un copolymère d'isobutylène avec une faible part en pourcentage de diène, de préférence de butadiène.

43. Joint de liaison selon la revendication 42, caractérisé en ce que la bande renferme des charges minérales, de préférence contenant des silicates.

44. Joint de liaison selon l'une des revendications 1 à 43, caractérisé en ce qu'un composant de jointoiement formé par le joint d'étanchéité (8) renferme un additif ou est constitué par un matériau, qui lors de l'addition d'un produit activant se lie chimiquement au matériau des tubes individuels.

45. Joint de liaison selon la revendication 44, caractérisé en ce que l'additif ou le matériau est un ciment résistant aux acides, et le produit activant est de l'eau ou du verre soluble.

46. Joint de liaison selon la revendication 44 ou 45, caractérisé en ce que le matériau, sous forme de poudre ou de granulés, est maintenu par une enveloppe perméable, de préférence un tissu, un tissu à mailles ou un tricot.

47. Joint de liaison selon l'une des revendications 19 à 46, caractérisé en ce que la gaine de soutien (25) est réalisée en métal, de préférence de l'acier inoxydable ou de l'aluminium, en matière plastique, de préférence du polytétrafluroroéthylène, ou en un matériau de fibres de carbone, de fibres céramiques ou de fibres minérales.

48. Joint de liaison selon l'une des revendications 1 à 47, caractérisé en ce que les tubes individuels (2) sont à paroi simple et/ou à paroi mince, et sont réalisés notamment en chamotte, céramique, verre ou béton cellulaire.

49. Joint de liaison selon la revendication 48, caractérisé en ce que les surfaces frontales des tubes individuels (2), formant le joint, sont plates.

50. Joint de liaison selon la revendication 48 ou 49, caractérisé en ce que les surfaces frontales des tubes individuels (2), sur le côté où elles coopèrent avec un composant de jointoiement formé par le joint d'étanchéité (8), sont chanfreinées, de préférence biseautées.

51. Joint de liaison selon l'une des revendications 1 à 50, caractérisé par un mortier de jointoiement résistant aux acides, en guise de masse de jointoiement amorphe, disposé radialement à l'intérieur du joint (6).

52. Utilisation d'un joint de liaison selon l'une des revendications 1 à 51, pour la réfection de cheminées par la mise en place intérieure de nouveaux conduits de gaz de fumée.

53. Utilisation d'un joint de liaison selon l'une des revendications 1 à 51, ou utilisation selon la revendication 52, pour l'introduction d'un tube individuel (2) dans une enveloppe (10) déjà plus haute, du conduit de gaz de fumée.

54. Utilisation selon la revendication 52 ou 53, avec la condition que les tubes individuels (2) présentent une longueur de plus de 75 cm, de préférence environ égale à 1 m.

55. Utilisation d'un joint de liaison selon l'une des revendications 1 à 51, ou utilisation selon l'une des revendications 52 à 54, pour la fabrication d'une cheminée à double paroi, constituée par au moins un conduit de gaz de fumée et une enveloppe (10) agencée à distance radiale du conduit de gaz de fumée, la cheminée présentant une résistance à la conductibilité thermique inférieure à 0,65 m²K/W.

56. Utilisation d'un joint de liaison selon l'une des revendications 1 à 51, ou utilisation selon l'une des revendications 52 à 54, pour la fabrication d'une cheminée à triple paroi, dans laquelle, entre au moins un conduit de gaz de fumée et une enveloppe de soutien, est disposée avec un certain jeu radial, notamment un espacement radial par rapport au conduit de gaz de fumée, une couche d'isolation thermique, notamment en laine minérale.

57. Utilisation selon la revendication 56, avec pour condition que la cheminée est à ventilation secondaire.

FIG.1

FIG.2

FIG.3

FIG.4

FIG.5a

FIG.5

FIG. 7

FIG. 8

FIG. 9

FIG. 10

FIG. 6

FIG 11